(19) **Europäisches Patentamt / European Patent Office / Office européen des brevets**

(11) **EP 4 700 564 A1**

(12) **EUROPEAN PATENT APPLICATION**
published in accordance with Art. 153(4) EPC

(43) Date of publication:
**25.02.2026  Bulletin 2026/09**

(21) Application number: **23933496.4**

(22) Date of filing: **21.04.2023**

(51) International Patent Classification (IPC):
***G06F 3/16*** (2006.01)

(52) Cooperative Patent Classification (CPC):
**G06F 3/16**

(86) International application number:
**PCT/CN2023/089712**

(87) International publication number:
**WO 2024/216620 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Shenzhen Yinwang Intelligent Technologies Co., Ltd.**
**Shenzhen, Guangdong 518110 (CN)**

(72) Inventors:
• **MO, Pinxi**
  **Shenzhen, Guangdong 518129 (CN)**
• **WU, Sheng**
  **Shenzhen, Guangdong 518129 (CN)**

(74) Representative: **Maiwald GmbH**
**Elisenhof**
**Elisenstraße 3**
**80335 München (DE)**

(54) **CONTROL METHOD AND APPARATUS, AND TERMINAL DEVICE**

(57) Embodiments of this application provide a control method and apparatus, and a terminal device. The method may be applied to the field of human-machine interaction. The method includes: A terminal device detects a touch operation on one or more microphones in a microphone array, where the touch operation indicates the terminal device to execute a human-machine interaction instruction, and microphones in the microphone array correspond to different spatial areas in the terminal device; and the terminal device controls, based on the touch operation, the terminal device to execute the human-machine interaction instruction. Embodiments of this application may be applied to a terminal device like an intelligent vehicle or an electric vehicle, and a user does not need to perform voice interaction with the terminal device. This helps improve accuracy of human-machine interaction in a high-noise or high-interference scenario, and avoids interference to another surrounding user in a voice interaction process, thereby helping improve human-machine interaction experience of the user.

1300

S1310: Obtain first touch control information corresponding to one or more microphones, where the first touch control information indicates a first operation, the one or more microphones belong to a pre-disposed microphone array, and microphones in the microphone array correspond to different spatial areas in a terminal device

S1320: Control, based on the first touch control information, the terminal device to perform the first operation

FIG. 13

**Description**

**TECHNICAL FIELD**

Embodiments of this application relate to the field of human-machine interaction, and more specifically, to a control method and apparatus, and a terminal device.

**BACKGROUND**

With intelligent development of terminal devices, voice interaction gradually becomes a mainstream human-machine interaction manner. The current voice interaction has some limitations. For example, when a user performs voice interaction with a terminal device, there is a specific interaction threshold, and a speaking speed and sound volume of the user need to be appropriate. For another example, in a high-noise or high-interference scenario, accuracy of the voice interaction is significantly reduced, affecting human-machine interaction experience of the user.

**SUMMARY**

This application provides a control method and apparatus, and a terminal device, to help improve human-machine interaction experience of a user.

According to a first aspect, a control method is provided. The method includes: obtaining first touch control information corresponding to one or more microphones, where the first touch control information indicates a first operation, the one or more microphones belong to a pre-disposed microphone array, and microphones in the microphone array correspond to different spatial areas in a terminal device; and controlling, based on the first touch control information, the terminal device to perform the first operation.

Based on the foregoing technical solution, the first touch control information corresponding to the one or more microphones is used to control the terminal device to perform the first operation, and a user does not need to perform voice interaction with the terminal device. This helps improve accuracy of human-machine interaction in a high-noise or high-interference scenario, and avoids interference to another surrounding user in a voice interaction process, thereby helping improve human-machine interaction experience of the user. In addition, the microphones in the microphone array correspond to different spatial areas in the terminal device, and control on different spatial areas can be implemented by using touch control information corresponding to the microphones in the microphone array. This helps improve flexibility of the human-machine interaction.

For example, the microphone array includes a microphone 1, a microphone 2, and a microphone 3, and the spatial areas in the terminal device includes a spatial area 1, a spatial area 2, and a spatial area 3.

In some possible implementations, that the microphones in the microphone array correspond to the different spatial areas in the terminal device includes: A microphone in the microphone array corresponds to different spatial areas in the terminal device. For example, the microphone 1 may correspond to the spatial area 1, the spatial area 2, and the spatial area 3.

In some possible implementations, that the microphones in the microphone array correspond to the different spatial areas in the terminal device includes: A plurality of microphones in the microphone array correspond to different spatial areas in the terminal device. For example, the microphone 1 may correspond to the spatial area 1, a microphone 2 may correspond to the spatial area 2, and a microphone 3 may correspond to the spatial area 3.

In some possible implementations, when the plurality of microphones in the microphone array correspond to different spatial areas in the terminal device, the plurality of microphones may be respectively located in corresponding spatial areas. For example, the microphone 1 may be located in the spatial area 1, the microphone 2 may be located in the spatial area 2, and the microphone 3 may be located in the spatial area 3; or the plurality of microphones may be located in a spatial area in the terminal device, for example, the microphone 1, the microphone 2, and the microphone 3 may all be located in the spatial area 1.

In some possible implementations, the first touch control information includes a touch operation corresponding to the one or more microphones. For example, the touch operation includes one or more of tapping, double-tapping, continuous tapping, touching and holding, and continuous touching.

In some possible implementations, an example in which the terminal device is a notebook computer is used, and the first operation may be decreasing or increasing volume strength of a speaker in the notebook computer; or an example in which the terminal device is a smart desk lamp is used, and the first operation may be decreasing or increasing brightness of the smart desk lamp.

With reference to the first aspect, in some implementations of the first aspect, the terminal device is a vehicle, and the first operation includes controlling a vehicle window to be opened or closed, adjusting volume strength of a sound-making apparatus in the vehicle, switching a multimedia file, controlling a vehicle door to be locked or unlocked, or controlling a display apparatus in the vehicle to display a home screen.

Based on the foregoing technical solution, different cockpit devices in the vehicle can be controlled based on the first touch control information corresponding to the one or more microphones, thereby helping improve driving experience of the user. In addition, a virtual button or a physical button for a cockpit device does not need to be disposed in the cockpit. This helps reduce production costs of the vehicle.

In some possible implementations, the first operation further includes an operation of controlling a device outside the cockpit, like opening a trunk and folding a rear view mirror.

With reference to the first aspect, in some implementations of the first aspect, the terminal device is a transportation means, the transportation means includes a cockpit, the one or more microphones are located in a first area in the cockpit, and the controlling the terminal device to perform the first operation includes: controlling a cockpit device in the first area to perform the first operation.

Based on the foregoing technical solution, when the first touch control information of the one or more microphones corresponding to the first area is obtained, the cockpit device in the first area may be controlled to perform the first operation. In this way, interference to a user in another area in the cockpit can be avoided, and driving experience of the user can be improved.

In some possible implementations, for example, the transportation means is a vehicle, the first area may be a driver area, a front passenger area, a second-row left-side area, or a second-row right-side area. For example, when touch control information corresponding to one or more microphones in the driver area is obtained, an air conditioner temperature in the driver area, volume strength of a sound-making apparatus in the driver area (for example, volume strength of a speaker at a head pillow of a driver seat), or brightness of an atmosphere light in the driver area may be adjusted.

In some possible implementations, for example, the transportation means is the vehicle, and the first area may be an area outside the cockpit. For example, the one or more microphones may be located near the trunk. When the touch control information corresponding to the one or more microphones is obtained, the trunk may be controlled to be opened.

With reference to the first aspect, in some implementations of the first aspect, the terminal device is a transportation means, the transportation means includes a cockpit, the cockpit includes a first area and a second area, the one or more microphones are located in the first area, and the controlling the terminal device to perform the first operation includes: controlling a cockpit device in the second area to perform the first operation.

Based on the foregoing technical solution, when the first touch control information of the one or more microphones corresponding to the first area is obtained, the cockpit device in the second area may be controlled to perform the first operation. In this way, the user does not need to enter the second area to control the cockpit device. This helps improve efficiency of controlling a cockpit device in another area by the user.

In some possible implementations, for example, the transportation means is a vehicle, the first area may be a driver area, and the second area may be an area other than the driver area in the cockpit.

Based on the foregoing technical solution, the user in the driver area in the cockpit can control another area in the cockpit. In this way, it can be ensured that permission of the user in the driver area is higher than permission of a user in the another area. For example, the user in the driver area may light a reading light in a second-row left-side area by performing a touch operation on one or more microphones in the driver area. However, a user in the second-row left-side area cannot light a reading light in the driver area by performing a touch operation on one or more microphones in the second-row left-side area. For another example, the user in the driver area may unlock a vehicle door by performing a touch operation on the one or more microphones in the driver area. However, a user in a front passenger area cannot unlock the vehicle door by performing a touch operation on one or more microphones in the front passenger area, or a user in a rear row area (for example, the second-row left-side area or a second-row right-side area) cannot unlock the vehicle door by performing a touch operation on one or more microphones in the rear row area.

For example, the first area is the driver area, and the second area is the second-row left-side area. When touch control information corresponding to the one or more microphones in the driver area is obtained, a vehicle window in the second-row left-side area may be controlled to be closed.

In some possible implementations, for example, the transportation means is a vehicle, the first area may be a front-row area, and the second area may be a rear-row area.

In some possible implementations, the first area may be an area (for example, the driver area) in the cockpit, and the second area may be an area outside the cockpit. For example, when the touch control information corresponding to the one or more microphones in the driver area is obtained, a trunk of the vehicle may be controlled to be opened. With reference to the first aspect, in some implementations of the first aspect, the terminal device is a vehicle, a cockpit of the vehicle includes a plurality of areas, the one or more microphones include a first microphone, and the first microphone corresponds to the plurality of areas. For example, the plurality of areas may include a second-row left-side area and a second-row right-side area, and the first microphone is a microphone 1. The microphone 1 may correspond to the second-row left-side area and the second-row right-side area.

That the microphone 1 may correspond to the second-row left-side area and the second-row right-side area may be understood as that the microphone 1 may be configured to control cockpit devices in the second-row left-side area and the second-row right-side area. For example, the cockpit device is a speaker. When an operation of tapping the microphone 1 by the user is obtained, volume of a speaker in the second-row left-side area may be controlled to be increased. When an operation of double-tapping the microphone 1 by the user is obtained, the volume of the speaker in the second-row left-side area may be controlled to be decreased. When an operation of continuously tapping the microphone 1 by the user is obtained, volume of a speaker in the second-row right-side area may be controlled to be increased. When an operation of touching and holding the microphone 1 by the user is obtained, the volume of the speaker in the second-row right-side area may be controlled to be decreased.

With reference to the first aspect, in some implementations of the first aspect, a configuration of the microphone array is a linear array, a circular array, a rectangular array, or a multi-arm array.

With reference to the first aspect, in some implementations of the first aspect, before the obtaining the first touch control information corresponding to the one or more microphones, the method further includes: obtaining a first touch operation of a user on a mechanical transmission component included in the terminal device; and controlling, based on the first touch operation, the mechanical transmission component to touch the one or more microphones.

Based on the foregoing technical solution, the mechanical transmission component may be added between the microphone array and the user, and the mechanical transmission component may transfer a touch operation of a person to a microphone in the microphone array, to replace the user to be in direct contact with the microphone. For some special groups (for example, a child in a safety seat or a user with a hand impairment), the mechanical transmission component may help the special groups touch a microphone, thereby improving human-machine interaction experience of the user.

In some possible implementations, a texture marker is set around the one or more microphones. In this way, a touch operation of a user in a dark environment can be implemented, or a touch operation of a blind person can be implemented.

In some possible implementations, an indicator or a motor is disposed around the one or more microphones. When the touch control information corresponding to the one or more microphones is obtained, an interactive feedback may be generated by controlling the indicator to be turned on or the motor to vibrate, so that the user determines whether the one or more microphones are successfully touched. This helps improve human-machine interaction experience of the user.

With reference to the first aspect, in some implementations of the first aspect, the first touch control information includes a second touch operation corresponding to the one or more microphones. The controlling, based on the first touch control information, the terminal device to perform the first operation includes: controlling, based on the second touch operation, the terminal device to perform the first operation.

Based on the foregoing technical solution, when the second touch operation for the one or more microphones is obtained, the terminal device may be controlled to perform the first operation. In this way, the user does not need to perform voice interaction with the terminal device. This helps improve accuracy of human-machine interaction in a high-noise or high-interference scenario, and avoids interference to another surrounding user in a voice interaction process, thereby helping improve human-machine interaction experience of the user.

The second touch operation may be performed by the user or a device.

For example, when detecting the first touch operation of the user on the mechanical transmission component, the terminal device may control the mechanical transmission component to touch the one or more microphones. In a process in which the mechanical transmission component touches the one or more microphones, the second touch operation of the mechanical transmission component on the one or more microphones may be obtained by analyzing signals collected by the one or more microphones.

For another example, when detecting that the user touches the one or more microphones, the terminal device may analyze the signals collected by the one or more microphones, to obtain the second touch operation of the user on the one or more microphones. Alternatively, for example, the terminal device is a transportation means, and when detecting that the user touches the one or more microphones, the terminal device may determine the second touch operation of the user on the one or more microphones by using data collected by a sensor (for example, a camera) in the cockpit.

In some possible implementations, the terminal device stores a mapping relationship between a type of the touch operation and the operation performed by the terminal device. The controlling, based on the second touch operation, the terminal device to perform the first operation includes: controlling, based on the second touch operation and the mapping relationship, the terminal device to perform the first operation.

With reference to the first aspect, in some implementations of the first aspect, the first touch control information corresponds to one microphone, and the first touch control information represents an energy difference between signals collected by the microphone at different moments (or different time periods), and/or signal coherence between the signals collected by the microphone at different moments (or different time periods).

Based on the foregoing technical solution, the terminal device may be controlled to perform the first operation by analyzing the energy difference and/or the signal coherence between the signals collected by the microphone at different moments (or different time periods). In this way, the user does not need to perform voice interaction with the terminal device. This helps improve accuracy of human-machine interaction in a high-noise or high-interference scenario, and avoids interference to another surrounding user in a voice interaction process, thereby helping improve human-machine interaction experience of the user.

With reference to the first aspect, in some implementations of the first aspect, the first touch control information corresponds to a plurality of microphones, and the first touch control information represents an energy difference between signals collected by the plurality of microphones, and/or signal coherence between the signals collected by the plurality of microphones.

Based on the foregoing technical solution, the terminal device may be controlled to perform the first operation by analyzing the energy difference and/or the signal coherence between the signals collected by the plurality of microphones. In this way, the user does not need to perform voice interaction with the terminal device. This helps improve accuracy of human-machine interaction in a high-noise or high-interference scenario, and avoids interference to another surrounding user in a voice interaction process, thereby helping improve human-machine interaction experience of the user.

In some possible implementations, the analyzing the energy difference between the signals collected by the plurality of microphones includes: analyzing an energy difference between signals collected by at least two microphones in the plurality of microphones at a same moment (or a same time period).

In some possible implementations, the analyzing the energy difference between the signals collected by the at least two microphones in the plurality of microphones at the same moment (or the same time period) includes: analyzing an energy difference between signals collected by all the microphones in the plurality of microphones at the same moment (or the same time period).

With reference to the first aspect, in some implementations of the first aspect, the plurality of microphones include a second microphone and a third microphone. The first operation is an operation corresponding to tapping the second microphone, and the first touch control information represents that in a first time period, energy of a signal collected by the second microphone is greater than energy of a signal collected by the third microphone, and an energy difference between the signal collected by the second microphone and the signal collected by the third microphone meets a first preset condition.

With reference to the first aspect, in some implementations of the first aspect, the plurality of microphones include a second microphone and a third microphone. The first operation is an operation corresponding to continuously tapping or continuously touching the second microphone, and the first touch control information represents that in a plurality of time periods, energy of a signal collected by the second microphone is greater than energy of a signal collected by the third microphone, and an energy difference between the signal collected by the second microphone and the signal collected by the third microphone meets a first preset condition.

Based on the foregoing technical solution, the terminal device may be controlled to perform the first operation by analyzing the energy difference and/or the signal coherence between the signals collected by the plurality of microphones. In this way, the user does not need to send a voice instruction to control the terminal device to perform a corresponding operation. This helps improve accuracy of human-machine interaction in a high-noise or high-interference scenario, and avoids interference to another surrounding user in a voice interaction process, thereby helping improve human-machine interaction experience of the user.

In some possible implementations, a time interval between every two adjacent time periods in the plurality of time period is less than or equal to a preset time interval.

For example, the preset time interval is 0.4 second (second, s).

In some possible implementations, the continuous tapping includes double-tapping or continuous tapping.

In some possible implementations, the controlling, based on the first touch control information, the terminal device to perform the first operation includes: determining, based on the energy difference between the signals collected by the second microphone and the third microphone and/or the signal coherence between the signals collected by the second microphone and the third microphone, that the second microphone is touched; and controlling the terminal device to perform the first operation corresponding to the second microphone.

In some possible implementations, the determining, based on the energy difference between the signals collected by the second microphone and the third microphone and/or the signal coherence between the signals collected by the second microphone and the third microphone, that the second microphone is touched includes: when the energy difference between the signal collected by the second microphone and the signal collected by the third microphone meets the first preset condition, and the energy of the signal collected by the second microphone is greater than the energy of the signal collected by the third microphone, determining that the second microphone is touched.

Based on the foregoing technical solution, when the energy difference between the energy collected by the second microphone and the energy collected by the third microphone meets the first preset condition, and the energy of the signal collected by the second microphone is greater than the energy of the signal collected by the third microphone, it may be determined that the second microphone is touched. Therefore, the terminal device may perform the first operation corresponding to touching the second microphone.

In some possible implementations, that the energy difference between the signal collected by the second microphone and the signal collected by the third microphone meets the first preset condition includes: The energy difference between the signal collected by the second microphone and the signal collected by the third microphone is greater than or equal to a preset difference, and/or an energy ratio between the signal collected by the second microphone and the signal collected by the third microphone is greater than or equal to a preset ratio.

In some possible implementations, touching the second microphone includes tapping the second microphone, double-tapping the second microphone, continuously tapping the second microphone, or continuously touching the second microphone.

The touching the second microphone may be the second touch operation.

With reference to the first aspect, in some implementations of the first aspect, the first touch control information represents that the energy of the signal collected by the second microphone is greater than or equal to a first preset threshold.

Based on the foregoing technical solution, when the energy difference between the signal collected by the second microphone and the signal collected by the third microphone meets the preset condition, and the energy of the signal collected by the second microphone is greater than or equal to the first preset threshold, it may be determined that the second microphone is touched. This helps improve accuracy of identifying touching on the microphone, thereby helping improve efficiency and accuracy of the human-machine interaction.

With reference to the first aspect, in some implementations of the first aspect, the plurality of microphones include a fourth microphone and a fifth microphone. The first operation is an operation corresponding to touching and holding the fourth microphone, and the first touch control information represents that in a first frequency band, energy of a signal collected by the fourth microphone is less than energy of a signal collected by the fifth microphone, and an energy difference between the signal collected by the fourth microphone and the signal collected by the fifth microphone meets a second preset condition.

In some possible implementations, the controlling, based on the first touch control information, the terminal device to perform the first operation includes: determining, based on the energy difference between the signals collected by the fourth microphone and the fifth microphone and/or signal coherence between the signals collected by the fourth microphone and the fifth microphone, that the fourth microphone is touched and held; and controlling the terminal device to perform the first operation corresponding to touching and holding the fourth microphone.

The touching and holding the fourth microphone may be the second touch operation.

In some possible implementations, the determining, based on the energy difference between the signals collected by the fourth microphone and the fifth microphone and/or the signal coherence between the signals collected by the fourth microphone and the fifth microphone, that the fourth microphone is touched and held includes: in the first frequency band, when the energy difference between the signal collected by the fourth microphone and the signal collected by the fifth microphone meets the second preset condition, and the energy of the signal collected by the fourth microphone is less than the energy of the signal collected by the fifth microphone, determining that the fourth microphone is touched and held.

In some possible implementations, the first frequency band is a medium and high frequency band. For example, the first frequency band is (100 Hz, 8000 Hz).

With reference to the first aspect, in some implementations of the first aspect, the first touch control information represents that the energy of the signal collected by the fourth microphone is less than or equal to a second preset threshold.

Based on the foregoing technical solution, when the energy difference between the signal collected by the fourth microphone and the signal collected by the fifth microphone meets the preset condition, and the energy of the signal collected by the fourth microphone is less than or equal to the second preset threshold, it may be determined that the fourth microphone is touched and held. This helps improve accuracy of identifying touching and holding on the microphone, thereby helping improve efficiency and accuracy of the human-machine interaction.

With reference to the first aspect, in some implementations of the first aspect, the energy difference includes at least one of a time domain amplitude difference, a time domain energy difference, a frequency domain sub-band amplitude difference, and a frequency band energy difference.

Based on the foregoing technical solution, with reference to at least one of a time domain amplitude, time domain energy, a frequency domain sub-band amplitude, and frequency band energy of a signal collected by a microphone, accuracy of identifying a type of a touch operation by using the signal of the microphone is improved.

According to a second aspect, a control apparatus is provided. The apparatus includes: an obtaining unit, configured to obtain first touch control information corresponding to one or more microphones, where the first touch control information indicates a first operation, the one or more microphones belong to a pre-disposed microphone array, and microphones in the microphone array correspond to different spatial areas in a terminal device; and a control unit, configured to control, based on the first touch control information, the terminal device to perform the first operation.

With reference to the second aspect, in some implementations of the second aspect, the terminal device is a transportation means, the transportation means includes a cockpit, the one or more microphones are located in a first area in the cockpit, and the control unit is configured to control a cockpit device in the first area to perform the first operation.

With reference to the second aspect, in some implementations of the second aspect, the terminal device is a transportation means, the transportation means includes a cockpit, the cockpit includes a first area and a second area, the one or more microphones are located in the first area, and the control unit is configured to control a cockpit device in the second area to perform the first operation.

With reference to the second aspect, in some implementations of the second aspect, the terminal device is a transportation means, the transportation means includes a cockpit, the cockpit includes a plurality of areas, the one or more microphones include a first microphone, and the first microphone corresponds to the plurality of areas.

With reference to the second aspect, in some implementations of the second aspect, the terminal device is a vehicle, and the first operation includes controlling a vehicle window to be opened or closed, adjusting volume strength of a sound-making apparatus in the vehicle, switching a multimedia file, controlling a vehicle door to be locked or unlocked, or controlling a display apparatus in the vehicle to display a home screen.

With reference to the second aspect, in some implementations of the second aspect, a configuration of the microphone array is a linear array, a circular array, a rectangular array, or a multi-arm array.

With reference to the second aspect, in some implementations of the second aspect, the terminal device further includes a mechanical transmission component. The obtaining unit is further configured to: before obtaining the first touch control information corresponding to the one or more microphones, obtain a first touch operation of a user on the mechanical transmission component; and the control unit is further configured to control, based on the first touch operation, the mechanical transmission component to touch the one or more microphones.

With reference to the second aspect, in some implementations of the second aspect, the first touch control information includes a second touch operation corresponding to the one or more microphones; and the control unit is configured to control, based on the second touch operation, the terminal device to perform the first operation.

With reference to the second aspect, in some implementations of the second aspect, the first touch control information corresponds to one microphone, and the first touch control information represents an energy difference between signals collected by the microphone at different moments, and/or signal coherence between the signals collected by the microphone at different moments.

With reference to the second aspect, in some implementations of the second aspect, the first touch control information corresponds to a plurality of microphones, and the first touch control information represents an energy difference between signals collected by the plurality of microphones, and/or signal coherence between the signals collected by the plurality of microphones.

With reference to the second aspect, in some implementations of the second aspect, the plurality of microphones include a second microphone and a third microphone. The first operation is an operation corresponding to tapping the second microphone, and the first touch control information represents that in a first time period, energy of a signal collected by the second microphone is greater than energy of a signal collected by the third microphone, and an energy difference between the signal collected by the second microphone and the signal collected by the third microphone meets a first preset condition.

With reference to the second aspect, in some implementations of the second aspect, the plurality of microphones include a second microphone and a third microphone. The first operation is an operation corresponding to continuously tapping or continuously touching the second microphone, and the first touch control information represents that in a plurality of time periods, energy of a signal collected by the second microphone is greater than energy of a signal collected by the third microphone, and an energy difference between the signal collected by the second microphone and the signal collected by the third microphone meets a first preset condition.

With reference to the second aspect, in some implementations of the second aspect, the first touch control information represents that the energy of the signal collected by the second microphone is greater than or equal to a first preset threshold.

With reference to the second aspect, in some implementations of the second aspect, the plurality of microphones include a fourth microphone and a fifth microphone. The first operation is an operation corresponding to touching and holding the fourth microphone, and the first touch control information represents that in a first frequency band, energy of a signal collected by the fourth microphone is less than energy of a signal collected by the fifth microphone, and an energy difference between the signal collected by the fourth microphone and the signal collected by the fifth microphone meets a second preset condition.

With reference to the second aspect, in some implementations of the second aspect, the first touch control information represents that the energy of the signal collected by the fourth microphone is less than or equal to a second preset threshold.

With reference to the second aspect, in some implementations of the second aspect, the energy difference includes at least one of a time domain amplitude difference, a time domain energy difference, a frequency domain sub-band amplitude difference, and a frequency band energy difference.

According to a third aspect, a control apparatus is provided. The control apparatus includes a processing unit and a storage unit. The storage unit is configured to store instructions. The processing unit executes the instructions stored in the storage unit, so that the control apparatus is enabled to perform any possible method in the first aspect.

According to a fourth aspect, a control system is provided. The system includes a microphone array and a computing platform. The computing platform includes any possible control apparatus in the second aspect or the third aspect.

In some possible implementations, the control system further includes a cockpit device.

In some possible implementations, the control system further includes the mechanical transmission component in the first aspect.

In some possible implementations, a configuration of the microphone array is a linear array, a circular array, a rectangular array, or a multi-arm array.

According to a fifth aspect, a terminal device is provided. The terminal device includes any possible control apparatus in the second aspect, or includes the control apparatus in the third aspect, or includes the control system in the fourth aspect.

In some possible implementations, the terminal device is a transportation means (for example, a vehicle).

In some possible implementations, the terminal device is a smart home.

According to a sixth aspect, a computer program product is provided. The computer program product includes computer program code. When the computer program code is run on a computer, the computer is enabled to perform any possible method in the first aspect.

It should be noted that all or a part of the computer program code may be stored in a first storage medium. The first storage medium may be packaged together with a processor, or may be packaged separately from a processor. This is not specifically limited in this embodiment of this application.

According to a seventh aspect, a computer-readable medium is provided. The computer-readable medium stores program code. When the computer program code is run on a computer, the computer is enabled to perform any possible method in the first aspect.

According to an eighth aspect, an embodiment of this application provides a chip system. The chip system includes a processor, configured to invoke a computer program or computer instructions stored in a memory, so that the processor is enabled to perform any possible method in the first aspect.

With reference to the eighth aspect, in a possible implementation, the processor is coupled to the memory through an interface.

With reference to the eighth aspect, in a possible implementation, the chip system further includes the memory, and the memory stores the computer program or the computer instructions.

## BRIEF DESCRIPTION OF DRAWINGS

FIG. 1 is a functional block diagram of a terminal device according to an embodiment of this application;
FIG. 2 is a diagram of a configuration of a microphone array according to an embodiment of this application;
FIG. 3 is a diagram of arrangement of a microphone array in a vehicle according to an embodiment of this application;
FIG. 4(a) and FIG. 4(b) show a group of human machine interfaces HMIs according to an embodiment of this application;
FIG. 5(a) and FIG. 5(b) show another group of HMIs according to an embodiment of this application;
FIG. 6 shows another HMI according to an embodiment of this application;
FIG. 7 is a diagram of other arrangement of microphone arrays in a vehicle according to an embodiment of this application;
FIG. 8(a) and FIG. 8(b) show another group of HMIs according to an embodiment of this application;
FIG. 9(a) and FIG. 9(b) show another group of HMIs according to an embodiment of this application;
FIG. 10 shows another HMI according to an embodiment of this application;
FIG. 11(a) and FIG. 11(b) show another group of HMIs according to an embodiment of this application;
FIG. 12 shows another application scenario according to an embodiment of this application;
FIG. 13 is a schematic flowchart of a control method according to an embodiment of this application;
FIG. 14 shows energy change curves of signals picked up by microphones when the microphones in a microphone array are neither touched nor touched and held according to an embodiment of this application;
FIG. 15 shows energy change curves of signals picked up by microphones in a microphone array when a mic 1 is tapped according to an embodiment of this application;
FIG. 16 shows energy change curves of signals picked up by microphones in a microphone array when a mic 1 is double-tapped according to an embodiment of this application;
FIG. 17 shows energy change curves of signals picked up by microphones in a microphone array when a mic 1 is continuously touched according to an embodiment of this application;

FIG. 18 shows energy change curves of signals picked up by microphones in a microphone array when a mic 1 is touched and held according to an embodiment of this application;

FIG. 19 is a diagram of determining, by using signal coherence, whether a microphone is touched or touched and held according to an embodiment of this application; and

FIG. 20 is a block diagram of a control apparatus according to an embodiment of this application.

## DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B", similar to "A and/or B", describes an association relationship between associated objects and represents that three relationships may exist. For example, at least one of A and B may represent the following three cases: Only A exists, both A and B exist, and only B exists.

Prefix words "first", "second", and the like in embodiments of this application are merely intended to distinguish between different described objects, and impose no limitation on locations, sequences, priorities, quantities, content, or the like of the described objects. In embodiments of this application, use of the prefix words, for example, ordinal numbers, used to distinguish between the described objects does not constitute a limitation on the described objects. For descriptions of the described objects, refer to the descriptions of the context in the claims or embodiments. The use of such prefix words should not constitute a redundant limitation. In addition, in the descriptions of embodiments, unless otherwise specified, "a plurality of" means two or more.

The method provided in this application may be applied to a terminal device like a mobile phone, a tablet computer, a wearable device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a transportation means, or a smart home. A specific type of the terminal device is not limited in embodiments of this application.

The transportation means in this application may include road transportation, water transportation, air transportation, an industrial device, an agricultural device, an entertainment device, or the like. For example, the transportation means may be a vehicle. The vehicle is a vehicle in a broad sense, and may be transportation (like a commercial vehicle, a passenger vehicle, a motorcycle, a flight vehicle, or a train), an industrial vehicle (like a pallet truck, a trailer, or a tractor), an engineering vehicle (like an excavator, a bulldozer, or a crane), an agricultural device (like a lawn mower or a harvester), an entertainment device, or a toy vehicle. A type of the vehicle is not specifically limited in embodiments of this application. For another example, the transportation means may be transportation like an aircraft or a ship.

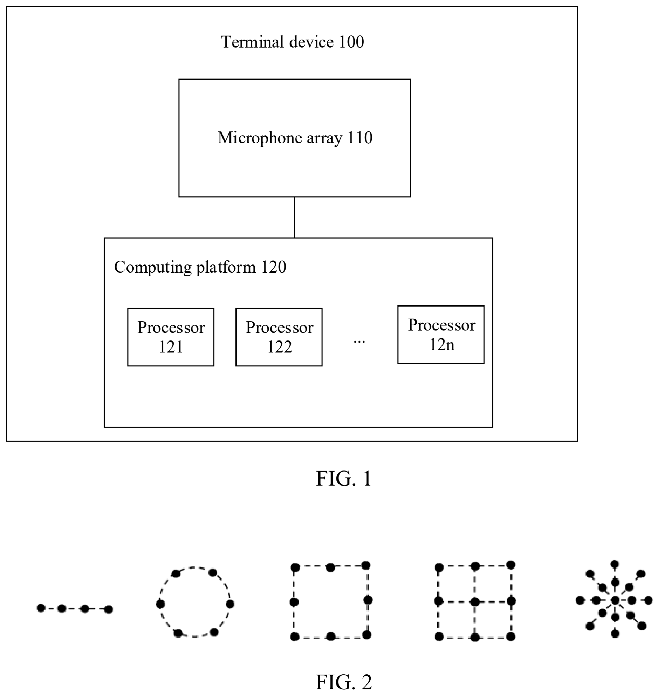

FIG. 1 is a functional block diagram of a terminal device 100 according to an embodiment of this application. The terminal device 100 may include a microphone array 110 and a computing platform 120. The microphone array 110 may include one or more microphone arrays, or the microphone array 110 may include a plurality of microphones.

The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions. A part or all of the processors 121 to 12n may invoke the instructions in the memory to execute the instructions, to implement a corresponding function. In this embodiment of this application, the computing platform 120 may obtain touch control information corresponding to one or more microphones in the microphone array 110, and control, based on the touch control information, the terminal device to perform a corresponding human-machine interaction operation.

A connection line between the microphone array 110 and the computing platform 120 indicates that the microphone array 110 and the computing platform 120 may be wirelessly connected or wiredly connected.

FIG. 2 is a diagram of a configuration of a microphone array according to an embodiment of this application. A microphone array may include two or more microphones and has a specific spatial configuration. In a spatial dimension, microphone arrays are generally classified into a one-dimensional linear array, a two-dimensional planar array, and a three-dimensional array. For example, FIG. 2 sequentially shows, from left to right, a microphone array that is configured as a linear array, a circular array, a rectangular array, a matrix array, and a multi-arm array. For example, the terminal device 100 is a transportation means. The microphone array may be a large array distributed in a large range in a cockpit, or may be a small array in a local area. Optionally, the microphone array may be multiplexed with a sound pickup microphone or an active noise reduction microphone in the cockpit.

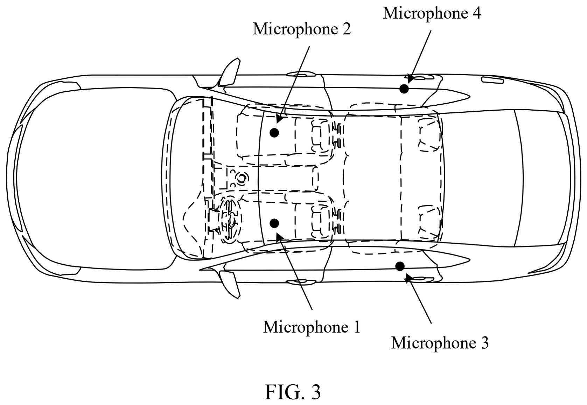

For example, the terminal device 100 is a vehicle. FIG. 3 is a diagram of arrangement of a microphone array in a vehicle according to an embodiment of this application. As shown in FIG. 3, the microphone array in the vehicle includes a microphone 1, a microphone 2, a microphone 3, and a microphone 4. The microphone 1, the microphone 2, the microphone 3, and the microphone 4 respectively correspond to different spatial areas in the vehicle. For example, the microphone 1 may be located at a ceiling in a driver area. For another example, the microphone 2 may be located at a ceiling in a front passenger area. For another example, the microphone 3 may be located at a roof safety armrest in a second-row left-side area. For another example, the microphone 4 may be located at a roof safety armrest in a second-row right-side area.

The foregoing arrangement locations of the microphone 1, the microphone 2, the microphone 3, and the microphone 4 in the cockpit are merely examples. Embodiments of this application are not limited thereto. For example, the microphone 1 may be further located on a steering wheel in the driver area. For another example, the microphone 3 may be further located on a frame of an entertainment screen in the second-row left-side area.

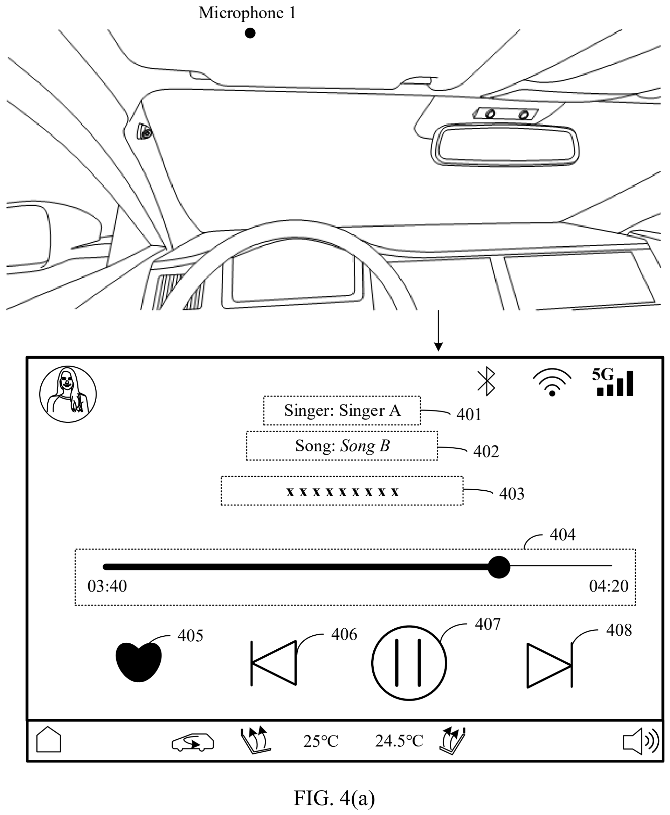

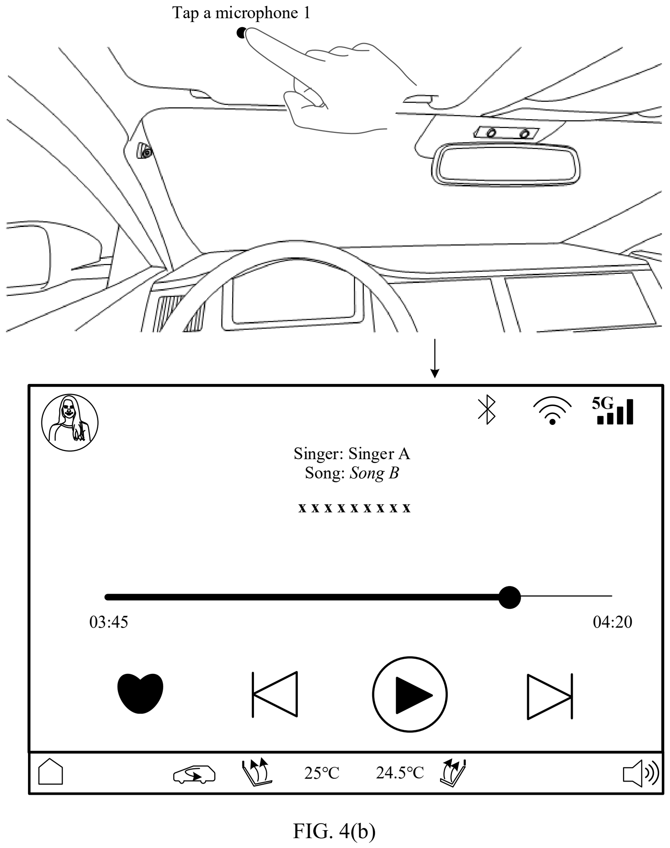

For example, FIG. 4(a) and FIG. 4(b) show a group of human machine interfaces (human machine interfaces, HMIs) according to an embodiment of this application.

As shown in FIG. 4(a), a central display of the vehicle currently displays a music playing interface. The music playing interface includes singer information 401 (for example, a singer A), song information 402 (for example, a song B), lyric information 403, a playing progress bar 404, a like control 405, a control 406 for switching to a previous song, an on/pause control 407, and a control 408 for switching to a next song.

As shown in FIG. 4(b), when a tap operation corresponding to a microphone 1 in a driver area is obtained, the vehicle may control the song to be switched from a play-on state to a play-pause state.

That when the tap operation corresponding to the microphone 1 in the driver area is obtained, the vehicle may control the song to be switched from the play-on state to the play-pause state includes: determining the tap operation corresponding to the microphone 1 based on energy differences between signals collected by the microphone 1, a microphone 2, a microphone 3, and a microphone 4, and/or signal coherence between the signals collected by the microphone 1, the microphone 2, the microphone 3, and the microphone 4; and controlling, based on the tap operation on the microphone 1, the song to be switched from the play-on state to the play-pause state.

For example, in a first time period, when energy of the signal collected by the microphone 1 is greater than energy of the signals collected by the microphone 2, the microphone 3, and the microphone 4, and the energy difference between the signal collected by the microphone 1 and the signal collected by the microphone 2, the energy difference between the signal collected by the microphone 1 and the signal collected by the microphone 3, and the energy difference between the signal collected by the microphone 1 and the signal collected by the microphone 4 meet a preset condition, the tap operation corresponding to the microphone 1 may be determined.

Alternatively, a cockpit device may be directly controlled, based on an energy difference between signals collected by a plurality of microphones and/or signal coherence between the signals collected by the plurality of microphones, to perform a corresponding operation.

Alternatively, the cockpit device may be directly controlled, based on an energy difference between signals collected by a single microphone at different moments (or different time periods) and/or signal coherence between the signals collected by the single microphone at different moments (or different time periods), to perform a corresponding operation. For example, if energy of a signal collected by the microphone 1 at a first moment is less than energy of a signal collected by the microphone 1 at a second moment, and an energy difference between the signal collected by the microphone 1 at the first moment and the signal collected by the microphone 1 at the second moment meets the preset condition, the song may be controlled to be switched from the play-on state to the play-pause state. The first moment may be earlier than the second moment.

In the following embodiment, an example in which the terminal device is controlled to perform an operation corresponding to a type of a touch operation after the type of the touch operation corresponding to one or more microphones is obtained is used for description.

In this embodiment of this application, the tap operation on the microphone is obtained, so that the song can be controlled to be switched to the play-pause state. In this way, a user does not need to control a playing status of the song by using a voice instruction. This helps improve accuracy of human-machine interaction in a high-noise or high-interference scenario, and avoids interference to another surrounding user in a voice interaction process, thereby helping improve human-machine interaction experience of the user.

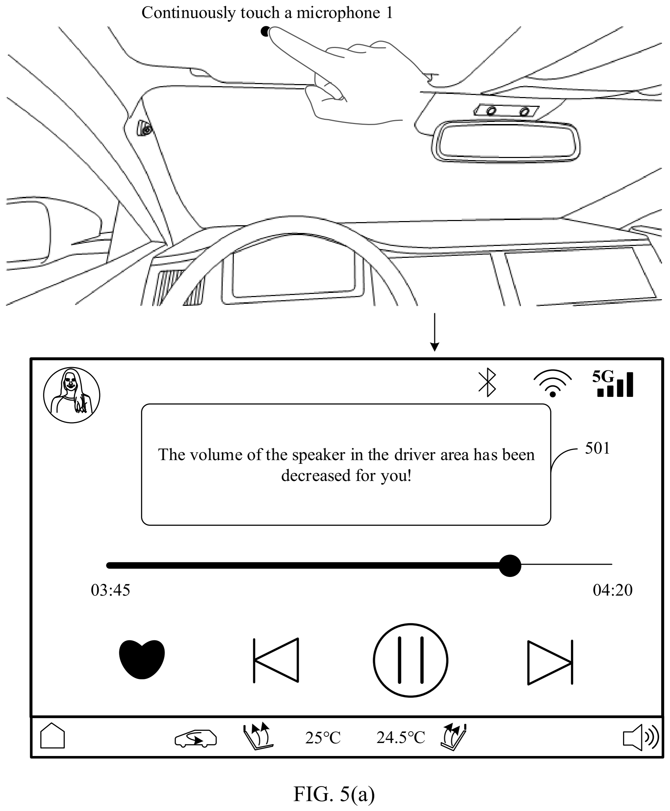

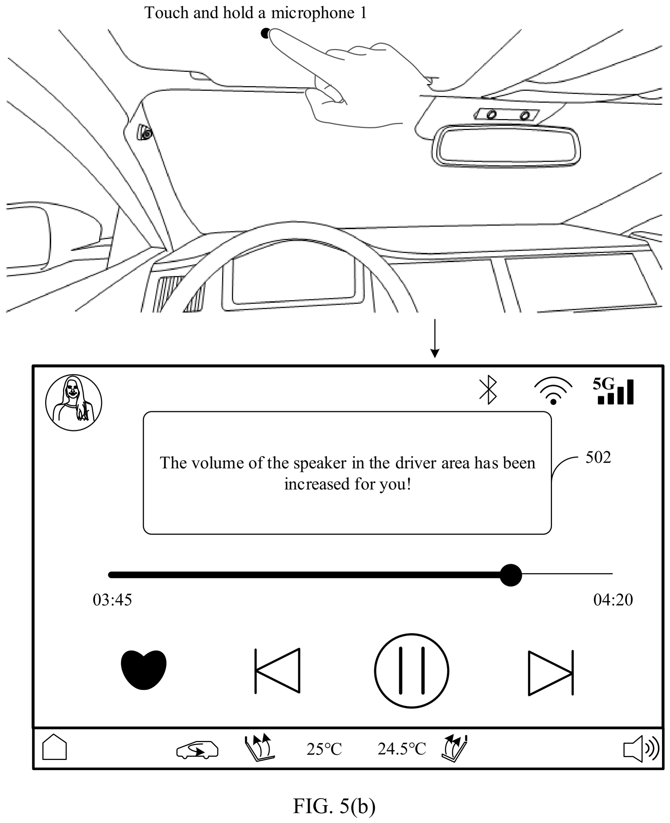

For example, FIG. 5(a) and FIG. 5(b) show another group of HMIs according to an embodiment of this application.

As shown in FIG. 5(a), when obtaining a continuous touch operation corresponding to the microphone 1 in the driver area, the vehicle may control volume of a speaker in the driver area to be decreased, and display a prompt box 501 on the central display. The prompt box 501 includes prompt information "The volume of the speaker in the driver area has been decreased for you!".

As shown in FIG. 5(b), when obtaining a touch and hold operation corresponding to the microphone 1 in the driver area, the vehicle may control the volume of the speaker in the driver area to be increased, and display a prompt box 502 on the central display. The prompt box 502 includes prompt information "The volume of the speaker in the driver area has been increased for you!".

In this embodiment of this application, the touch operation or the touch and hold operation on the microphone 1 in the driver area is obtained, so that the volume of the speaker in the driver area can be controlled to be adjusted. In this way, the user does not need to adjust the volume of the speaker in the driver area by using a voice instruction. This helps improve accuracy of human-machine interaction in a high-noise or high-interference scenario, and avoids interference to another surrounding user in a voice interaction process, thereby helping improve human-machine interaction experience of the user. In addition, the touch operation or the touch and hold operation on the microphone 1 only adjusts the volume of the speaker in the driver area, and does not affect listening experience of a user in another area in the cockpit.

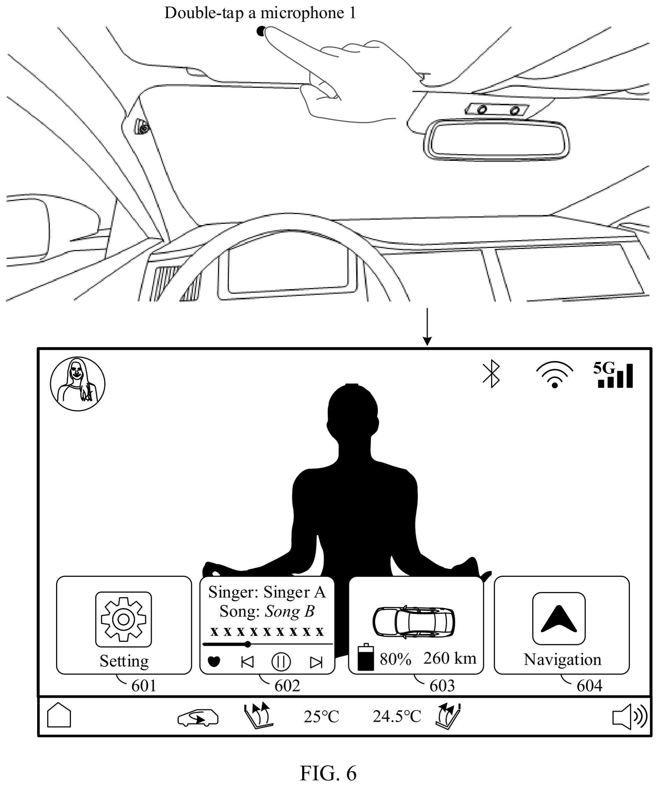

For example, FIG. 6 shows another HMI according to an embodiment of this application. When obtaining a double-tap operation corresponding to the microphone 1 in the driver area, the vehicle may control the central display to switch from displaying the music playing interface to displaying a home screen. The home screen includes a widget 601 corresponding to a setting application, a widget 602 corresponding to a music application, a widget 603 corresponding to a remaining state of charge of the vehicle and a remaining traveling range, and a widget 604 corresponding to a navigation application.

In this embodiment of this application, the double-tap operation on the microphone is obtained, so that the central display may be controlled to switch from displaying the music playing interface to displaying the home screen. In this way, there is no need to dispose, on the central display, a virtual button for switching to display the home screen, and the user does not need to control, by using a voice instruction, the central display to switch from displaying the music playing interface to displaying the home screen. This helps improve accuracy of human-machine interaction in a high-noise or high-interference scenario, and avoids interference to another surrounding user in a voice interaction process, thereby helping improve human-machine interaction experience of the user.

FIG. 4(a) to FIG. 6 are described by using examples in which tapping the microphone 1 corresponds to pausing or starting playing of the song, continuously touching the microphone 1 corresponds to decreasing the volume of the speaker, touching and holding the microphone 1 corresponds to increasing the volume of the speaker, and double-tapping the microphone 1 corresponds to switching to display the home screen. A correspondence between the type of the touch operation on the microphone and an operation performed by the terminal device is not specifically limited in this embodiment of this application. For example, when obtaining the continuous touch operation corresponding to the microphone 1 in the driver area, the vehicle may control a window in the driver area to fall; and when obtaining the touch and hold operation corresponding to the microphone 1 in the driver area, the vehicle may control the window in the driver area to rise.

For another example, when obtaining an operation of double-tapping the microphone 1, the vehicle may perform an operation of adding music to favorites; when obtaining an operation of continuously tapping the microphone 1, the vehicle may control the central display to display the home screen; and when obtaining an operation of continuously touching the microphone 1, an optimal sound listening configuration in the driver area may be implemented.

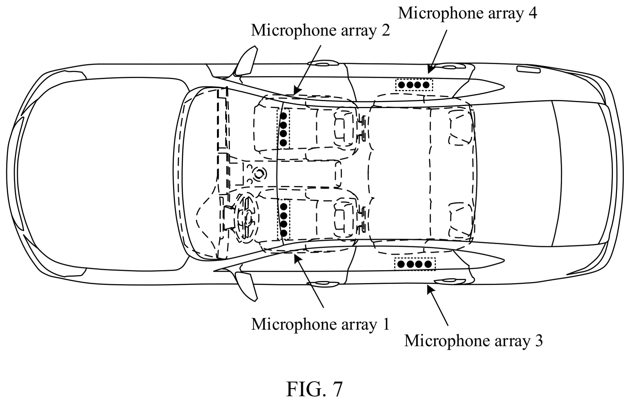

The foregoing FIG. 3 is described by using an example in which the cockpit includes one microphone array. The following describes a scenario in which the cockpit includes a plurality of microphone arrays with reference to FIG. 7 to FIG. 9(b).

FIG. 7 is a diagram of arrangement of microphone arrays in a vehicle according to an embodiment of this application. As shown in FIG. 7, the microphone arrays in the vehicle include a microphone array 1, a microphone array 2, a microphone array 3, and a microphone array 4, and each microphone array includes four microphones. The microphone array 1, the microphone array 2, the microphone array 3, and the microphone array 4 respectively correspond to different spatial areas in the vehicle. For example, the microphone array 1 may be located at a ceiling in a driver area. For another example, the microphone array 2 may be located at a ceiling in a front passenger area. For another example, the microphone array 3 may be located at a roof safety armrest in a second-row left-side area. For another example, the microphone array 4 may be located at a roof safety armrest in a second-row right-side area.

FIG. 7 is described by using an example in which a configuration of a microphone array disposed in each area in the vehicle cockpit is a linear array. Embodiments of this application are not limited thereto. For example, a configuration of the microphone array in the driver area may be a linear array, a configuration of the microphone array in the front passenger area may be a circular array, and a configuration of the microphone arrays in the second-row left-side area and the second-row right-side area may be a rectangular array.

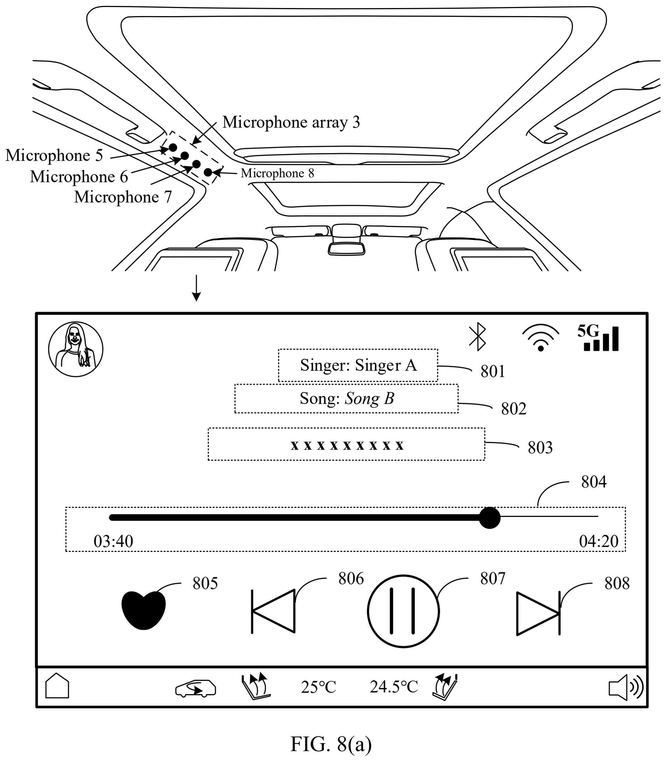

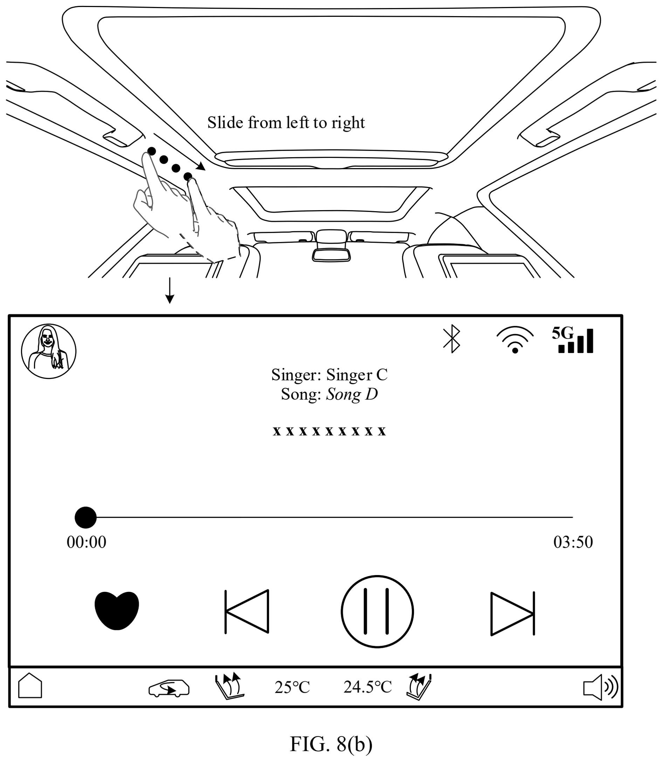

For example, FIG. 8(a) and FIG. 8(b) show another group of HMIs according to an embodiment of this application.

As shown in FIG. 8(a), an entertainment screen in a second-row left-side area in a vehicle currently displays a music playing interface. The music playing interface includes singer information 801 (for example, a singer A), song information 802 (for example, a song B), lyric information 803, a playing progress bar 804, a like control 805, a control 806 for switching to a previous song, an on/pause control 807, and a control 808 for switching to a next song. A microphone array 3 in a second-row left-side area in the vehicle may have a plurality of microphones, for example, a microphone 5, a microphone 6, a microphone 7, and a microphone 8.

As shown in FIG. 8(b), when obtaining an operation of sliding from left to right (or a sliding operation from a microphone 5 to a microphone 8) corresponding to a microphone in the microphone array 3, the vehicle may control an entertainment screen in the second-row left-side area to perform an operation of switching to a next song. For example, the vehicle may control the entertainment screen in the second-row left-side area to switch from a playing interface on which a song B is displayed to a playing interface on which a song D is displayed.

The obtaining the operation of sliding the microphone in the microphone array 3 from left to right may also be understood as obtaining an operation of tapping the microphone 5 to the microphone 8 in sequence by a user.

In an embodiment, when obtaining an operation of sliding from right to left (or a sliding operation from the microphone 8 to the microphone 5) corresponding to the microphone in the microphone array 3, the vehicle may control the entertainment screen in the second-row left-side area to perform an operation of switching to a previous song.

In this embodiment of this application, when a sliding operation on a plurality of microphones in the microphone array in the second-row left-side area towards a direction is obtained, a song displayed on the entertainment screen in the second-row left-side area may be switched. In this way, the user does not need to control switching of the song by using a voice instruction. This helps improve accuracy of human-machine interaction in a high-noise or high-interference scenario, and avoids interference to another surrounding user in a voice interaction process, thereby helping improve human-machine interaction experience of the user.

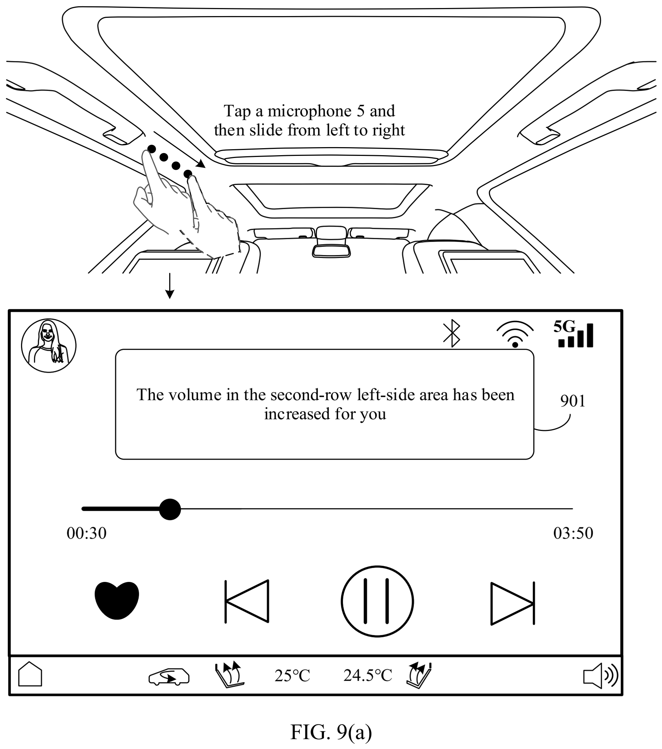

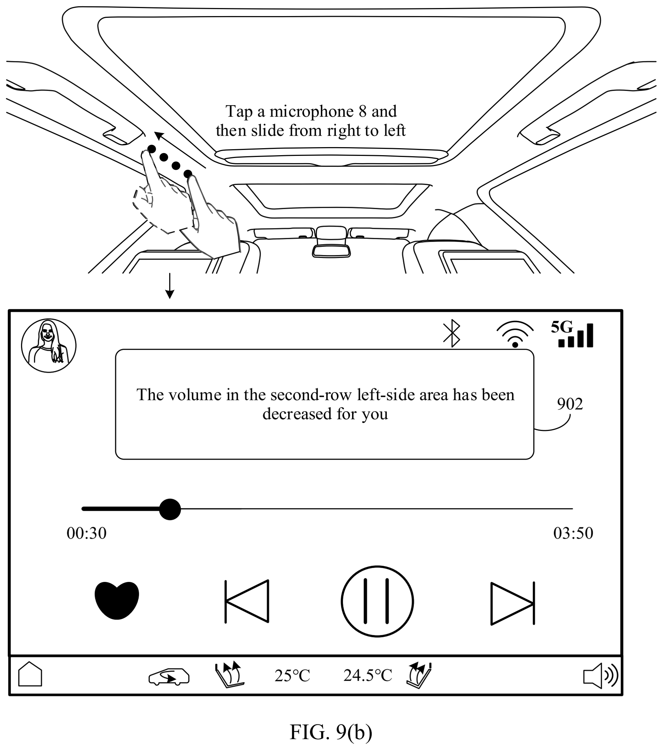

For example, FIG. 9(a) and FIG. 9(b) show another group of HMIs according to an embodiment of this application.

As shown in FIG. 9(a), when obtaining an operation of first tapping a microphone 5 and then sliding from left to right (or a sliding operation from the microphone 5 to a microphone 8), a vehicle may control volume of a speaker in a second-row left-side area to be increased and control an entertainment screen in a second-row left-side area to display a prompt box 901. The prompt box 901 includes prompt information "The volume in the second-row left-side area has been increased for you".

As shown in FIG. 9(b), when obtaining an operation of first tapping the microphone 8 and then sliding from right to left (or a sliding operation from the microphone 8 to the microphone 5), the vehicle may control the volume of the speaker in the second-row left-side area to be increased and control the entertainment screen in the second-row left-side area to display a prompt box 902. The prompt box 902 includes prompt information "The volume in the second-row left-side area has been decreased for you".

In this embodiment of this application, when the operation of tapping and then sliding on the microphone in the second-row left-side area is obtained, the volume of the speaker in the second-row left-side area may be adjusted. In this way, a user does not need to adjust the volume of the speaker by tapping a virtual button or a physical button, and the user does not need to adjust the volume of the speaker by using a voice instruction. This helps improve accuracy of human-machine interaction in a high-noise or high-interference scenario, and avoids interference to another surrounding user in a voice interaction process, thereby helping improve human-machine interaction experience of the user.

The foregoing is described by using an example in which the sliding operation from the microphone 5 to the microphone 8 corresponds to switching to the next song, the sliding operation from the microphone 8 to the microphone 5 corresponds to switching to the previous song, the operation of first tapping the microphone 5 and then sliding from the microphone 5 to the microphone 8 corresponds to increasing the volume of the speaker in the second-row left-side area, and the sliding operation first tapping the microphone 8 and then sliding from the microphone 8 to the microphone 5 corresponds to decreasing the volume of the speaker in the second-row left-side area. A correspondence between the type of the touch operation and the operation performed by the terminal device is not specifically limited in embodiments of this application. For example, when obtaining the operation of sliding from left to right (or a sliding operation from the microphone 5 to the microphone 8) corresponding to the microphone in the microphone array 3, the vehicle may control a window in the second-row left-side area to be closed. For another example, when obtaining an operation of first tapping the microphone 5 and then double-tapping the microphone 5 and the microphone 6, the vehicle may perform an operation of starting/stopping recording.

FIG. 5(a) and FIG. 5(b), FIG. 8(a) and FIG. 8(b), and FIG. 9(a) and FIG. 9(b) separately describe how to control a cockpit device in an area by performing a touch operation on a microphone in the area. Embodiments of this application are not limited thereto. For example, when obtaining a touch operation on a microphone in an area, the vehicle may further control a cockpit device in another area in the cockpit.

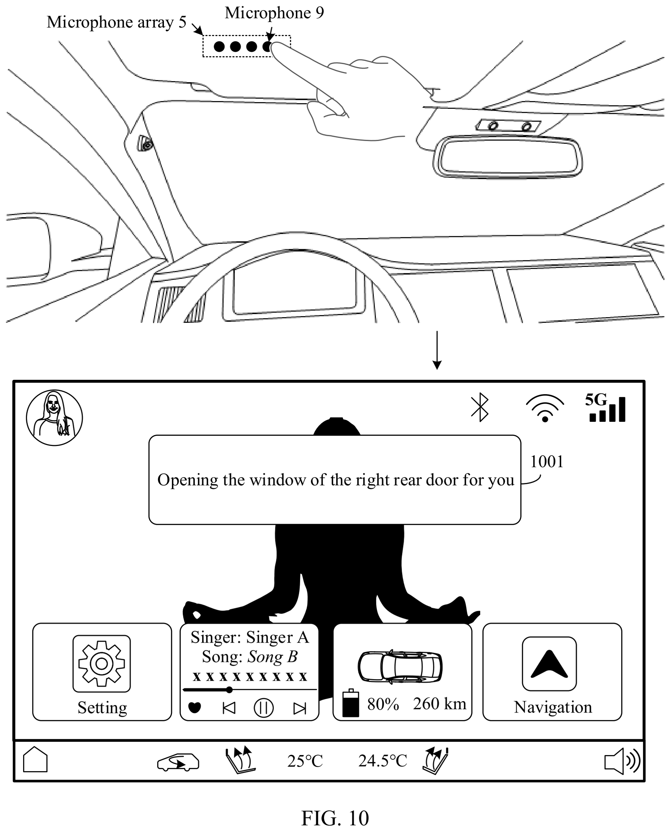

For example, FIG. 10 shows another HMI according to an embodiment of this application.

When obtaining a touch and hold operation corresponding to a rightmost microphone 9 in a microphone array 5, a vehicle may open a window in a second-row right-side area and display prompt information 1001 "Opening the window of the right rear door for you" on a central display.

In an embodiment, when obtaining a continuous touch operation corresponding to the rightmost microphone 9 in the microphone array 5, the vehicle may control the window in the second-row right-side area to be closed and display prompt information "Closing the window of the right rear door for you" on the central display.

In embodiments of this application, when obtaining a touch operation corresponding to a microphone in a driver area, a cockpit device in another area in a cockpit may be controlled to perform a corresponding operation. In this way, there is no need to dispose, in the driver area, a virtual button or a physical button for controlling a cockpit device in another area, and the user does not need to enter the another area to control the cockpit device. This helps improve efficiency of controlling the cockpit device in the another area by the user.

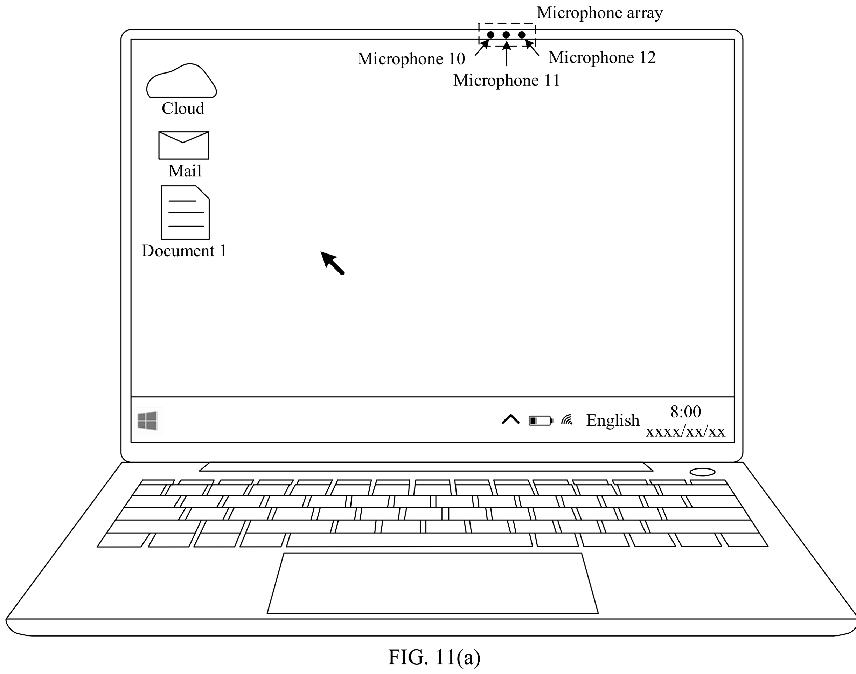

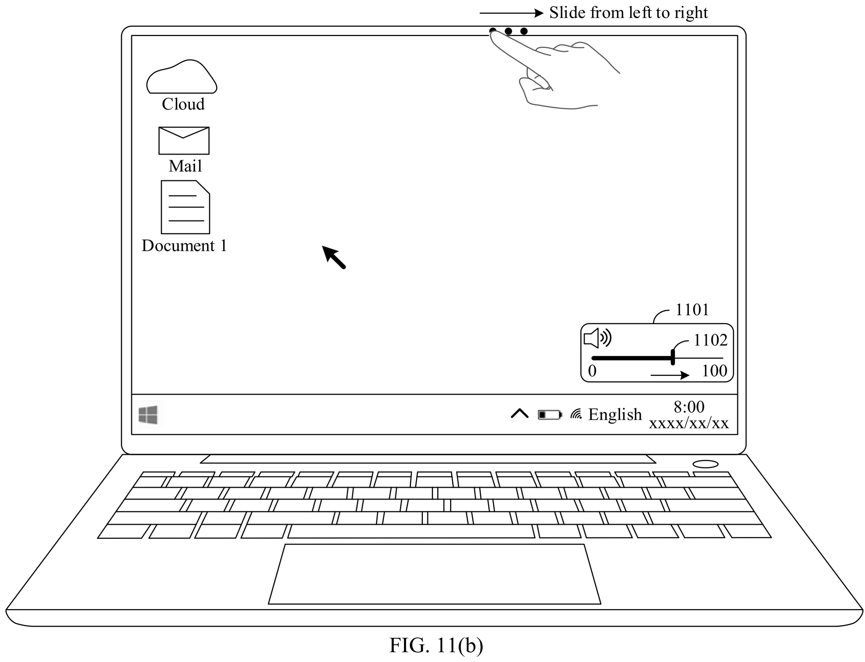

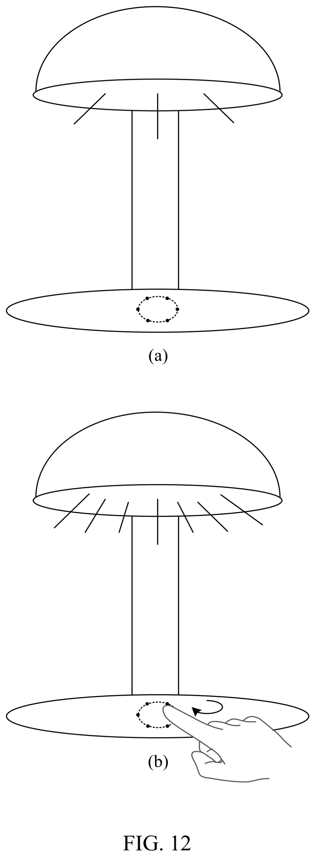

With reference to FIG. 3 to FIG. 10, the foregoing describes a scenario in which the vehicle performs a corresponding operation after a touch operation is performed on one or more microphones in the vehicle. With reference to FIG. 11(a) and FIG. 11(b) and FIG. 12, the following separately uses an example in which the terminal device is a notebook computer and a smart desk lamp for description.

FIG. 11(a) and FIG. 11(b) show another group of HMIs according to an embodiment of this application.

As shown in FIG. 11(a), a frame of the notebook computer includes a microphone array, and the microphone array includes a microphone 10, a microphone 11, and a microphone 12.

As shown in FIG. 11(b), when obtaining a sliding operation corresponding to the microphone 10 to the microphone 12, the notebook computer may control volume of a speaker to be increased and display a prompt box 1101 on a display. That a volume bar 1102 moves rightwards is displayed in the prompt box 1101

FIG. 11(a) and FIG. 11(b) are described by using an example in which the microphone array is located on an upper frame of the notebook computer. Embodiments of this application are not limited thereto. For example, the microphone array may alternatively be located on a lower frame of the notebook computer.

In this embodiment of this application, the volume of the notebook computer may be adjusted by using the sliding operation corresponding to the microphones in the microphone array. In this way, a user does not need to control a mouse to click a volume icon and then drag the volume bar to adjust the volume, thereby avoiding a complex operation of the user during volume adjustment, and helping improve user experience.

FIG. 12 shows another application scenario according to an embodiment of this application.

As shown in (a) in FIG. 12, a microphone array is disposed on a smart desk lamp, and a configuration of the microphone array is a circular array.

As shown in (b) in FIG. 12, when learning that a user sequentially touches each microphone in a clockwise manner, the smart desk lamp may control brightness to be gradually increased.

In an embodiment, when learning that the user sequentially touches each microphone in a counter-clockwise manner, the smart desk lamp may control the brightness to be gradually decreased.

In this embodiment of this application, the brightness of the smart desk lamp can be adjusted by performing a clockwise sliding operation or a counter-clockwise sliding operation corresponding to the microphones in the microphone array. In this way, there is no need to dispose, on the smart desk lamp, a physical button used to adjust the brightness, thereby helping reduce production costs of the smart desk lamp.

In an embodiment, a correspondence between a type of the touch operation and the operation performed by the terminal device may be set before the terminal device is delivered from a factory, or may be set by the user.

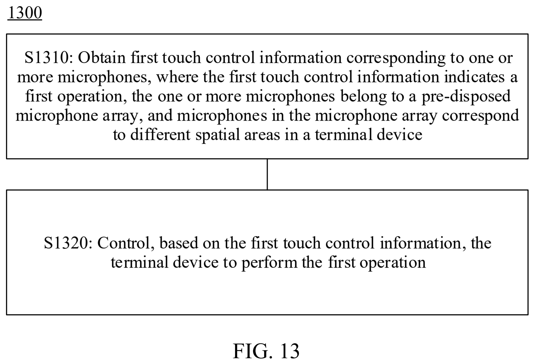

FIG. 13 is a schematic flowchart of a control method 1300 according to an embodiment of this application. The method 1300 may be performed by a terminal device (for example, a vehicle), or the method 1300 may be performed by the foregoing computing platform, or the method 1300 may be performed by a system including a computing platform and a microphone array, or the method 1300 may be performed by a system-on-a-chip (system-on-a-chip, SoC) on the foregoing computing platform, or the method 1300 may be performed by a processor on the computing platform. The method 1300 includes the following steps.

S1310: Obtain first touch control information corresponding to one or more microphones, where the first touch control information indicates a first operation, the one or more microphones belong to a pre-disposed microphone array, and microphones in the microphone array correspond to different spatial areas in a terminal device.

In an embodiment, that the microphones in the microphone array correspond to the different spatial areas in the terminal device includes: The microphones in the microphone array are configured to control apparatuses in different spatial areas in the terminal device. For example, the terminal device is a vehicle. The microphones in the microphone array may be configured to control cockpit devices in a driver area, a front passenger area, a second-row left-side area, and a second-row right-side area in the vehicle. For example, the terminal device is a smart home. The smart home may include smart devices (for example, air conditioners and lamps) in a plurality of rooms and a control apparatus in a living room. The control apparatus includes a microphone array, and microphones in the microphone array may correspond to a plurality of rooms. When obtaining touch control information corresponding to one or more microphones in the microphone array, a smart home system may control the smart device in the room.

In an embodiment, that the microphones in the microphone array correspond to the different spatial areas in the terminal device includes: A plurality of microphones in the microphone array are respectively located in different areas in the terminal device, and each microphone corresponds to an area in which the microphone is located.

For example, the microphone array may be the microphone array in FIG. 3, and the microphone array may include the microphone 1, the microphone 2, the microphone 3, and the microphone 4. The microphone 1 corresponds to the driver area in the vehicle, the microphone 2 corresponds to the front passenger area in the vehicle, the microphone 3 corresponds to the second-row left-side area in the vehicle, and the microphone 4 corresponds to the second-row right-side area in the vehicle.

For example, the microphone array may be the microphone array 1, the microphone array 2, the microphone array 3, and the microphone array 4 in FIG. 7. The microphone array 1 corresponds to the driver area in the vehicle, the microphone array 2 corresponds to the front passenger area in the vehicle, the microphone array 3 corresponds to the second-row left-side area in the vehicle, and the microphone array 4 corresponds to the second-row right-side area in the vehicle.

In an embodiment, that the microphones in the microphone array correspond to the different spatial areas in the terminal device includes: A plurality of microphones in the microphone array are located in a same spatial area in the terminal device, and the plurality of microphones respectively correspond to different areas in the terminal device.

For example, the microphone array may be the microphone array 5 located in the driver area in FIG. 10. The microphone array 5 includes four microphones, and the four microphones may respectively correspond to the driver area, the front passenger area, the second-row left-side area, and the second-row right-side area. For example, the rightmost microphone 9 may correspond to the second-row right-side area.

In an embodiment, that the microphones in the microphone array correspond to the different spatial areas in the terminal device includes: A microphone in the microphone array corresponds to different spatial areas in the terminal device.

For example, the microphone array may be the microphone array in FIG. 3, and the microphone array may include the microphone 1, the microphone 2, the microphone 3, and the microphone 4. The microphone 1 may correspond to the driver area and the front passenger area in the vehicle, and the microphone 2 may correspond to the second-row left-side area and the second-row right-side area in the vehicle.

Optionally, before the obtaining the first touch control information corresponding to the one or more microphones, the method further includes: obtaining a first touch operation of a user on a mechanical transmission component included in the terminal device; and controlling, based on the first touch operation, the mechanical transmission component to touch the one or more microphones. The mechanical transmission component added between the microphone and the user may transfer a touch operation of the user to the microphone by using the mechanical transmission component, to replace the user to be in direct contact with the microphone. For example, a child in a safety seat or a user with a hand impairment may not be able to directly touch a microphone. Therefore, the mechanical transmission component may help the child and the user implement a touch operation on the microphone, thereby helping the child and the user implement human-machine interaction.

Optionally, special texture markers may be set around the microphones in the microphone array, and the texture marker may indicate a location of each microphone. In this way, it may be convenient for the user to perform a touch operation in a dark environment, or it may be convenient for a blind person to perform a touch operation.

Optionally, interactive feedback may be performed on the touch operation of the user by using an indicator, a buzzer alert tone, voice broadcast, motor vibration, or the like, so that the user determines whether the touch operation is successfully performed on the microphone. This helps improve human-machine interaction experience of the user.

S1320: Control, based on the first touch control information, the terminal device to perform the first operation.

Optionally, the first touch control information includes a second touch operation corresponding to the one or more microphones. The controlling, based on the first touch control information, the terminal device to perform the first operation includes: controlling, based on the second touch operation, the terminal device to perform the first operation.

Optionally, the obtaining first touch control information corresponding to the one or more microphones includes: determining, based on data collected by a sensor included in the terminal device, the second touch operation corresponding to the one or more microphones.

For example, the sensor includes one or more of a camera, a lidar, and a millimeter-wave radar.

For example, the terminal device may include a code including a microphone and a touch operation. For example, the microphone array may include a microphone 1 to a microphone M (M is a positive integer greater than 1). The touch operation on the microphone is defined, and a common touch operation includes tapping, double-tapping (defined as two times of tapping at a time interval between $(t_1, t_2)$), continuous tapping (defined as three or more times of tapping at a time

interval between ($t_1$, $t_2$)), touching and holding (defined as continuously touching and holding a sound pickup hole of the microphone for more than first preset duration), and continuous touching (defined as continuously touching the sound pickup hole of the microphone for more than second preset duration). Codes of tapping, double-tapping, continuous tapping, touching and holding, and continuous touching may be A, B, C, D, and E respectively. In this way, a touch operation on any microphone may form a code including a letter and a digit shown in Table 1. For example, a code of double-tapping the microphone 3 is B3.

Table 1

|  | Tap | Double-tap | Continuous tap | Touch and hold | Continuous touch | ... |
|---|---|---|---|---|---|---|
| Microphone 1 | A1 | B1 | C1 | D1 | E1 | ... |
| Microphone 2 | A2 | B2 | C2 | D2 | E2 | ... |
| Microphone 3 | A3 | B3 | C3 | D3 | E3 | ... |
| ... | ... | ... | ... | ... | ... | ... |
| Microphone M | AM | BM | CM | DM | EM | ... |

Simultaneous or sequential touch operations performed on the one or more microphones may be represented by a combination of the foregoing codes, and a form of a code sequence is: [code 1 code 2 ...]-[code 3 code 4 ...]-[code 5 code 6 ...]-..., where codes in "[]" represent simultaneous operations, and "-" connects codes of sequential operations. For example, if a touch operation is sequentially: (1) tapping the microphone 1; (2) simultaneously double-tapping the microphone 1 and the microphone 2; and (3) simultaneously continuously tapping the microphone 1, the microphone 2, and the microphone 3, a corresponding code sequence is A1-B1B2-C1C2C3.

For example, ($t_1$, $t_2$) may be (0.1s, 0.5s).

For example, the first preset duration may be 2s.

For example, the second preset duration may be 2s.

For example, as shown in FIG. 4(b), a code of the tap operation on the microphone 1 is A1.

For example, as shown in FIG. 8(b), a code of the sliding operation from the microphone 5 to the microphone 8 is A5-A6-A7-A8.

For example, as shown in FIG. 9(a), a code of the operation of first tapping the microphone 5 and then sliding from the microphone 5 to the microphone 8 is A5-A5-A6-A7-A8.

Optionally, the terminal device includes a correspondence between a type of the touch operation on the microphone and the operation performed by the terminal device. For example, the type of the touch operation on the microphone may be represented by the codes shown in Table 1.

Optionally, the first touch control information corresponds to one microphone, and the first touch control information represents an energy difference between signals collected by the microphone at different moments, and/or signal coherence between the signals collected by the microphone at different moments.

Optionally, the controlling, based on the first touch control information, the terminal device to perform the first operation includes: controlling, based on the energy difference between the signals collected by the microphone at different moments and/or the signal coherence between the signals collected by the microphone at different moments, the terminal device to perform the first operation.

The scenario shown in FIG. 3 is used as an example. When energy of a signal collected by the microphone 1 at a moment $T_1$ is less than energy of a signal collected by the microphone 1 at a moment $T_2$, and an energy difference between the signal collected by the microphone 1 at the moment $T_1$ and the signal collected by the microphone 1 at the moment $T_2$ is greater than or equal to a first preset threshold, volume of a speaker in the driver area may be controlled to be increased. The moment $T_2$ is later than the moment $T_1$.

Alternatively, when the energy of the signal collected by the microphone 1 at the moment Ti in a first frequency band is greater than the energy of the signal collected by the microphone 1 at the moment $T_2$ in the first frequency band, and the energy difference between the signal collected by the microphone 1 at the moment $T_1$ and the signal collected by the microphone 1 at the moment $T_2$ in the first frequency band is greater than a second preset threshold, the volume of the speaker in the driver area may be controlled to be decreased.

For example, the first frequency band is (100 Hz, 8000 Hz).

Optionally, the first touch control information corresponds to a plurality of microphones, and the first touch control information represents an energy difference between signals collected by the plurality of microphones, and/or signal coherence between the signals collected by the plurality of microphones.

The touch operation on the plurality of microphones in the microphone array enables the microphone array to collect a special signal different from a conventional sound signal. For example, for the conventional sound signal, signals picked up by the microphones in the microphone array are basically the same or similar. However, in a case in which a touch operation is performed on a microphone, a microphone that is touched (for example, including tapped, double-tapped, continuously tapped, or continuously touched) or that is touched and held generates a special signal different from the conventional sound signal, which is represented in two aspects.

(1) The microphone that is touched or touched and held may generate a special signal like a strong impact signal or a mute signal. For example, if a sound pickup hole of a microphone is touched, the microphone generates a strong impact signal. If a sound pickup hole of a microphone is touched and held, the microphone generates a mute signal with a large increase in a low frequency and large attenuation in a medium and high frequency.

(2) An energy difference between a signal collected by a microphone that is touched or touched and held and a signal collected by another microphone that is not touched and that is not touched and held is large, and an energy difference between signals collected by other microphones that are not touched and that are not touched and held is small.

Optionally, the plurality of microphones include a second microphone and a third microphone. The first operation is an operation corresponding to tapping the second microphone, and the first touch control information represents that in a first time period, energy of a signal collected by the second microphone is greater than energy of a signal collected by the third microphone, and an energy difference between the signal collected by the second microphone and the signal collected by the third microphone meets a first preset condition.

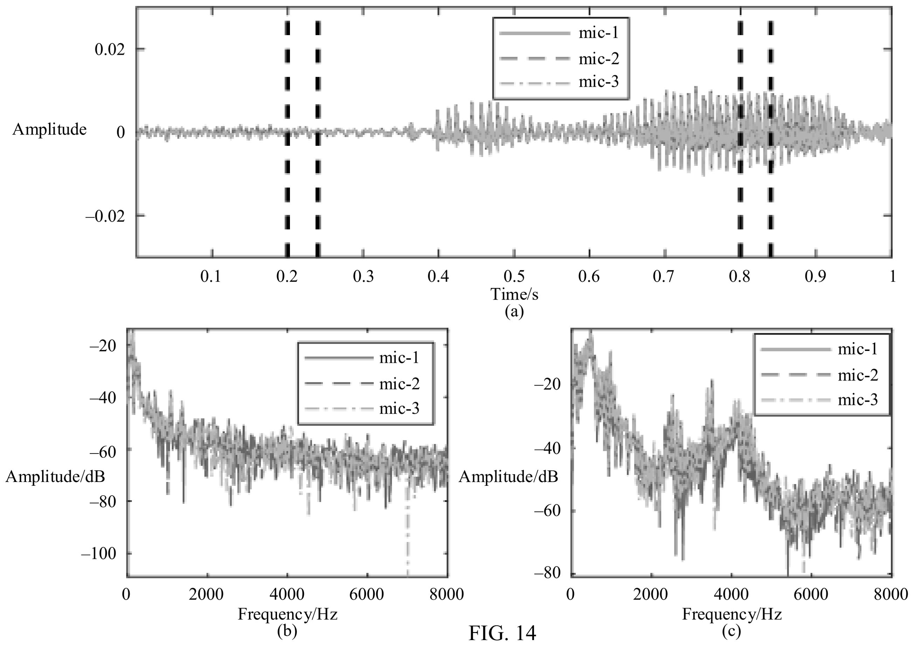

For example, the microphone array includes a mic 1 to a mic 3. FIG. 14 shows energy change curves of signals picked up by microphones when the microphones in a microphone array are neither touched nor touched and held according to an embodiment of this application.

(a) in FIG. 14 shows time domain amplitude change curves of signals collected by the mic 1 to the mic 3 in 1s. A horizontal coordinate is time, and a vertical coordinate is a time domain amplitude.

(b) in FIG. 14 shows spectrum energy amplitude change curves of the signals collected by the mic 1 to the mic 3 in a left dashed-line box in (a) in FIG. 14. A horizontal coordinate is a frequency, and a vertical coordinate is a spectrum energy amplitude. It can be learned that, in a time period (0.2s, 0.23s), because the mic 1 to the mic 3 are neither touched nor touched and held, differences between spectral energy amplitudes of the signals collected by the mic 1 to the mic 3 are not large.

(c) in FIG. 14 shows spectrum energy amplitude change curves of the signals collected by the mic 1 to the mic 3 in a right dashed-line box in (a) in FIG. 14. A horizontal coordinate is a frequency, and a vertical coordinate is a spectrum energy amplitude. It can be learned that, in the time period (0.8s, 0.83s), because the mic 1 to the mic 3 are neither touched nor touched and held, differences between spectral energy amplitudes of the signals collected by mic 1 to mic 3 are not large.

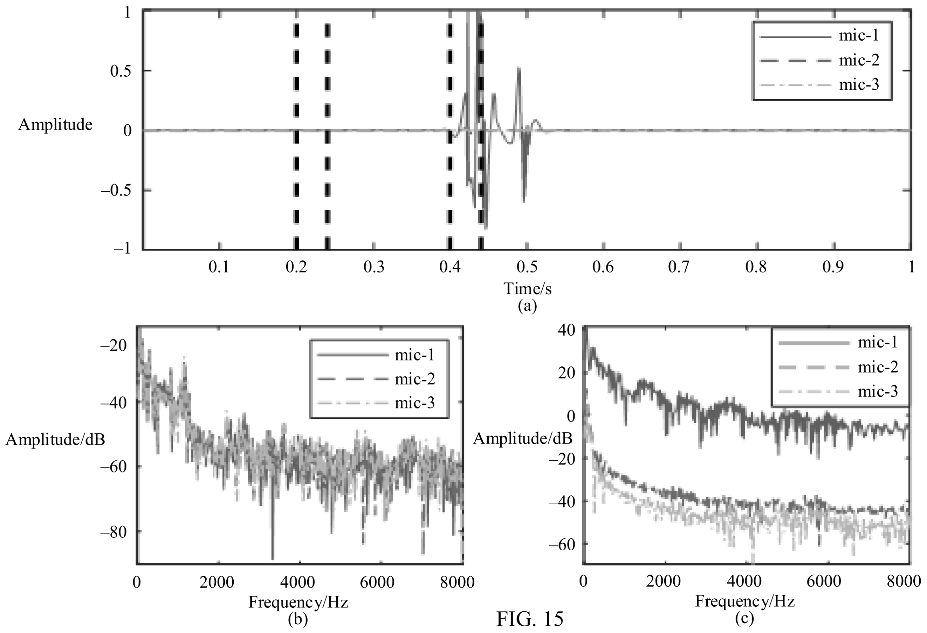

FIG. 15 shows energy change curves of signals picked up by microphones in a microphone array when the mic 1 is tapped according to an embodiment of this application.

(a) in FIG. 15 shows time domain amplitude change curves of signals collected by the mic 1 to the mic 3 in 1s. A horizontal coordinate is time, and a vertical coordinate is a time domain amplitude.

(b) in FIG. 15 shows spectrum energy amplitude change curves of the signals collected by the mic 1 to the mic 3 in a left dashed-line box in (a) in FIG. 15. A horizontal coordinate is a frequency, and a vertical coordinate is a spectrum energy amplitude. It can be learned that, in the time period (0.2s, 0.23s), because the mic 1 to the mic 3 are neither touched nor touched and held, differences between spectral energy amplitudes of the signals collected by the mic 1 to the mic 3 are not large.

(c) in FIG. 15 shows spectrum energy amplitude change curves of the signals collected by the mic 1 to the mic 3 in a right dashed-line box in (a) in FIG. 15. A horizontal coordinate is a frequency, and a vertical coordinate is a spectrum energy amplitude. It can be learned that, in a time period (0.4s, 0.43s), because the mic 1 is tapped, and the mic 2 and the mic 3 are neither touched nor touched and held, a spectral energy amplitude of the signal collected by the mic 1 is greater than spectral energy amplitudes of the signals collected by the mic 2 and the mic 3.

For example, the first time period may be the time period (0, 1s) shown in FIG. 15.

For example, the mic 1 may be the second microphone, and the mic 2 and the mic 3 may be the third microphone. The first preset condition may be that a difference between the spectral energy amplitude of the signal collected by the mic 1 and the spectral energy amplitude of the signal collected by the mic 2 is greater than or equal to a preset energy difference, and a difference between the spectral energy amplitude of the signal collected by the mic 1 and the spectral energy amplitude of the signal collected by the mic 3 is greater than or equal to the preset energy difference.

For example, the preset energy difference may be 10 dB.

The tapping the mic 1 may be one in the second touch operation.

In (0.4s, 0.43s), when learning that the spectral energy amplitude of the signal collected by the mic 1 is greater than the spectral energy amplitudes of the signals collected by the mic 2 and the mic 3, and a difference between the spectral energy amplitude of the signal collected by the mic 1 and the spectral energy amplitude of the signal collected by the mic 2 and a difference between the spectral energy amplitude of the signal collected by the mic 1 and the spectral energy amplitude of the signal collected by the mic 3 meet the first preset condition, the terminal device may be controlled to perform a corresponding operation.

Alternatively, in (0.4s, 0.43s), when learning that the spectral energy amplitude of the signal collected by the mic 1 is greater than the spectral energy amplitudes of the signals collected by the mic 2 and the mic 3, and a difference between the spectral energy amplitude of the signal collected by the mic 1 and the spectral energy amplitude of the signal collected by the mic 2 and a difference between the spectral energy amplitude of the signal collected by the mic 1 and the spectral energy amplitude of the signal collected by the mic 3 meet the first preset condition, the terminal device may determine that the mic 1 is tapped. Therefore, the terminal device may perform an operation corresponding to the mic 1 being tapped.

Optionally, the plurality of microphones include a second microphone and a third microphone. The first operation is an operation corresponding to continuously tapping or continuously touching the second microphone, and the first touch control information represents that in a plurality of time periods, energy of a signal collected by the second microphone is greater than energy of a signal collected by the third microphone, and an energy difference between the signal collected by the second microphone and the signal collected by the third microphone meets a first preset condition.

The continuously tapping the second microphone may include double-tapping the second microphone or continuously tapping the second microphone.

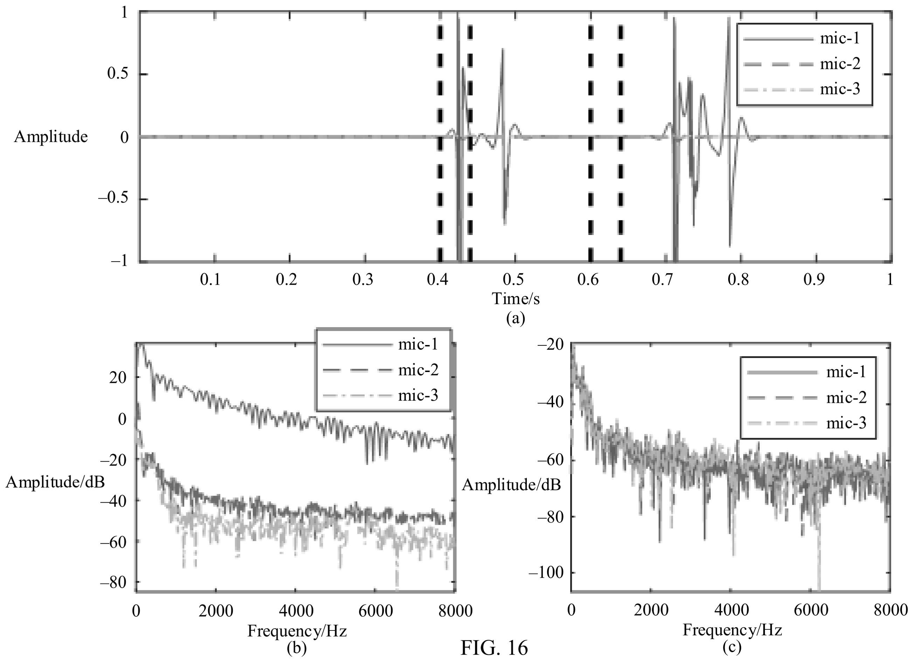

FIG. 16 shows energy change curves of signals picked up by microphones in a microphone array when the mic 1 is double-tapped according to an embodiment of this application.

(a) in FIG. 16 shows time domain amplitude change curves of signals collected by a mic 1 to a mic 3 in 1s. A horizontal coordinate is time, and a vertical coordinate is a time domain amplitude.

(b) in FIG. 16 shows spectrum energy amplitude change curves of the signals collected by the mic 1 to the mic 3 in a left dashed-line box in (a) in FIG. 16. A horizontal coordinate is a frequency, and a vertical coordinate is a spectrum energy amplitude. It can be learned that, in a time period (0.4s, 0.43s), because the mic 1 is tapped, and the mic 2 and the mic 3 are neither touched nor touched and held, a spectral energy amplitude of the signal collected by the mic 1 is greater than spectral energy amplitudes of the signals collected by the mic 2 and the mic 3.

(c) in FIG. 16 shows spectrum energy amplitude change curves of the signals collected by the mic 1 to the mic 3 in a right dashed-line box in (a) in FIG. 16. A horizontal coordinate is a frequency, and a vertical coordinate is a spectrum energy amplitude. It can be learned that, in a time period (0.6s, 0.63s) between two times of continuous tapping on the mic 1, because the mic 1 to the mic 3 are neither touched nor touched and held, differences between spectral energy amplitudes of signals collected by the mic 1 to the mic 3 are not large.

In the time period (0.6s, 0.63s), because the mic 1 is tapped again, and the mic 2 and the mic 3 are neither touched nor touched and held, the spectral energy amplitude of the signal collected by the mic 1 is greater than the spectral energy amplitudes of the signals collected by the mic 2 and the mic 3. Because a time interval between two times in which the spectral energy amplitude of the signal collected by the mic 1 is greater than the spectral energy amplitudes of the signals collected by the mic 2 and the mic 3 is less than a preset time interval, the terminal device may perform a corresponding operation. Alternatively, the terminal device may perform the corresponding operation after determining that the mic 1 is double-tapped.

For example, the preset time interval may be 0.4s.

The double-tapping the mic 1 may be one in the second touch operation.

With reference to FIG. 16, the foregoing describes an identification process of determining the double-tapping on the mic 1 by using the signals collected by the mic 1 to the mic 3. For a process of identifying continuous tapping, refer to the double-tapping identification process. Details are not described herein again.

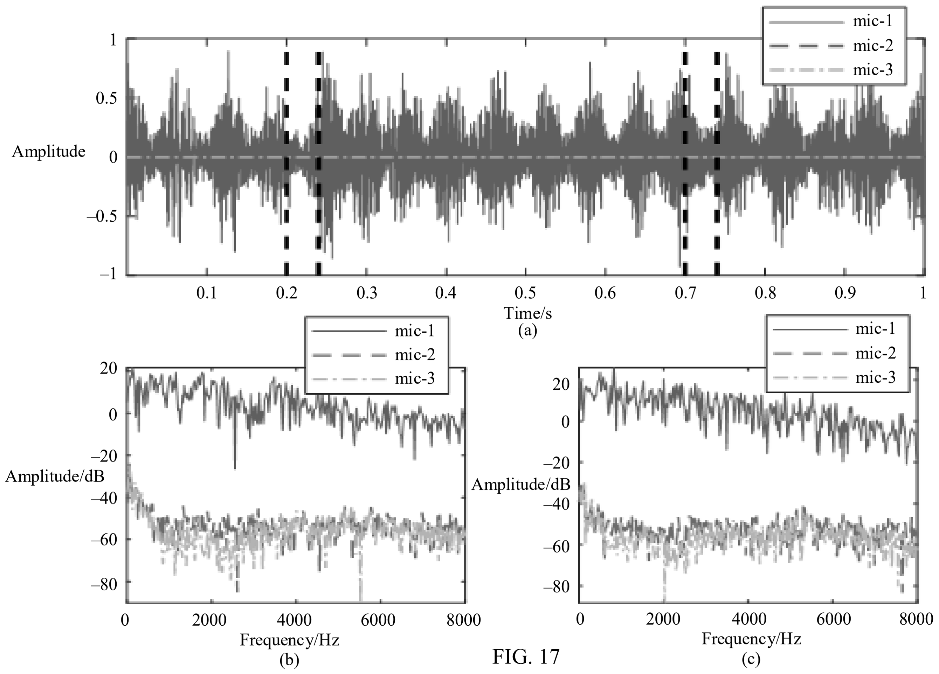

FIG. 17 shows energy change curves of signals picked up by microphones in a microphone array when a mic 1 is continuously touched according to an embodiment of this application.

(a) in FIG. 17 shows time domain amplitude change curves of signals collected by a mic 1 to a mic 3 in 1s. A horizontal coordinate is time, and a vertical coordinate is a time domain amplitude.

(b) in FIG. 17 shows spectrum energy amplitude change curves of the signals collected by the mic 1 to the mic 3 in a left dashed-line box in (a) in FIG. 17. A horizontal coordinate is a frequency, and a vertical coordinate is a spectrum energy amplitude. It can be learned that, in a time period (0.2s, 0.23s), because the mic 1 is touched, and the mic 2 and the mic 3 are neither touched nor touched and held, a spectral energy amplitude of the signal collected by the mic 1 is greater than spectral energy amplitudes of the signals collected by the mic 2 and the mic 3.

(c) in FIG. 17 shows spectrum energy amplitude change curves of the signals collected by the mic 1 to the mic 3 in a right dashed-line box in (a) in FIG. 17. A horizontal coordinate is a frequency, and a vertical coordinate is a spectrum energy amplitude. It can be learned that, in a time period (0.7s, 0.73s), because the mic 1 is touched, and the mic 2 and the mic 3 are neither touched nor touched and held, a spectral energy amplitude of the signal collected by the mic 1 is greater than spectral energy amplitudes of the signals collected by the mic 2 and the mic 3.

The continuously touching the mic 1 may be one in the second touch operation.

Optionally, the first touch control information represents that the energy of the signal collected by the second microphone is greater than or equal to a first preset threshold.

For example, the mic 1 in FIG. 15 is tapped. When it is determined that a difference between the spectral energy amplitude of the signal collected by the mic 1 and the spectral energy amplitude of the signal collected by the mic 2 is greater than or equal to a preset energy difference, a difference between the spectral energy amplitude of the signal collected by the mic 1 and the spectral energy amplitude of the signal collected by the mic 3 is greater than or equal to the preset energy difference, and in (0.4s, 0.43s), an average value of the spectral energy amplitudes of the signals collected by the mic 1 is greater than or equal to 10 dB, it is determined that the mic 1 is tapped.

The foregoing is described by using an example in which the average value of the spectral energy amplitudes of the signals collected by the mic 1 is greater than or equal to 10 dB. Embodiments of this application are not limited thereto. For example, it may be further determined whether total frequency band energy of the signals collected by the mic 1 is greater than or equal to a first preset threshold. In this case, the first preset threshold may be related to sensitivity of the microphone. For example, the first preset threshold may be an equivalent sound pressure level 80 dB.

Optionally, the plurality of microphones include a fourth microphone and a fifth microphone. The first operation is an operation corresponding to touching and holding the fourth microphone, and the first touch control information represents that in a first frequency band, energy of a signal collected by the fourth microphone is less than energy of a signal collected by the fifth microphone, and an energy difference between the signal collected by the fourth microphone and the signal collected by the fifth microphone meets a second preset condition.

For example, the first frequency band is (100 Hz, 8000 Hz).

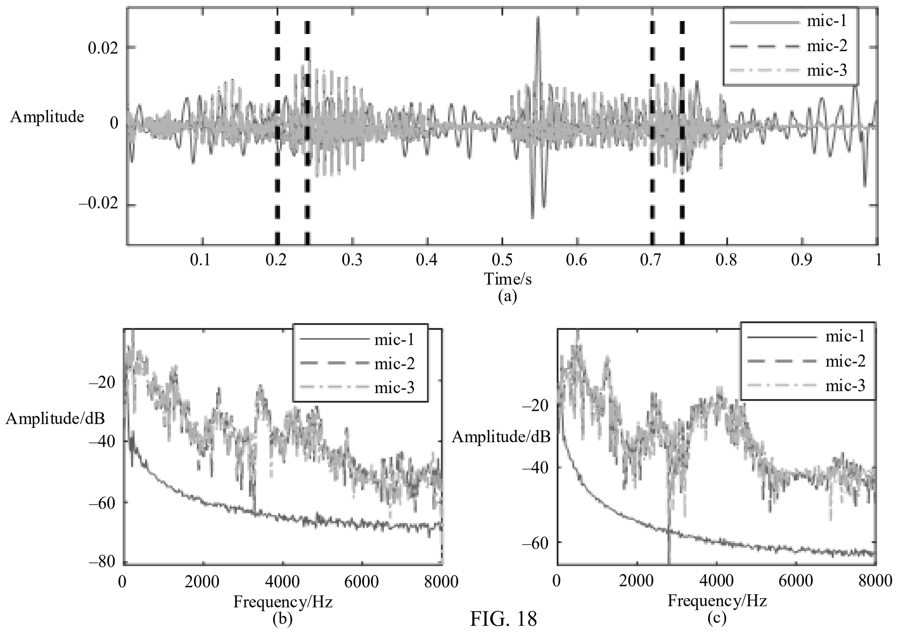

FIG. 18 shows energy change curves of signals picked up by microphones in a microphone array when a mic 1 is touched and held according to an embodiment of this application.

(a) in FIG. 18 shows time domain amplitude change curves of signals collected by a mic 1 to a mic 3 in 1s. A horizontal coordinate is time, and a vertical coordinate is a time domain amplitude.

(b) in FIG. 18 shows spectrum energy amplitude change curves of the signals collected by the mic 1 to the mic 3 in a left dashed-line box in (a) in FIG. 18. A horizontal coordinate is a frequency, and a vertical coordinate is a spectrum energy amplitude. It can be learned that, in a time period (0.2s, 0.23s), because the mic 1 is touched and held, and the mic 2 and the mic 3 are neither touched nor touched and held, a spectral energy amplitude of a signal collected by the mic 1 in a frequency band (100 Hz, 8000 Hz) is less than spectral energy amplitudes of signals collected by the mic 2 and the mic 3.

(c) in FIG. 18 shows spectrum energy amplitude change curves of the signals collected by the mic 1 to the mic 3 in a right dashed-line box in (a) in FIG. 18. A horizontal coordinate is a frequency, and a vertical coordinate is a spectrum energy amplitude. It can be learned that, in a time period (0.7s, 0.73s), because the mic 1 is touched and held, and the mic 2 and the mic 3 are neither touched nor touched and held, the spectral energy amplitude of the signal collected by the mic 1 in the frequency band (100 Hz, 8000 Hz) is less than the spectral energy amplitudes of the signals collected by the mic 2 and the mic 3.

The foregoing mic 1 may be the foregoing fourth microphone, and the mic 2 and the mic 3 may be the foregoing fifth microphone. The second preset condition may be that in (100 Hz, 8000 Hz), a difference between the spectral energy amplitude of the signal collected by the mic 2 and the spectral energy amplitude of the signal collected by the mic 1 is greater than or equal to a preset energy difference, and a difference between the spectral energy amplitude of the signal collected by the mic 3 and the spectral energy amplitude of the signal collected by the mic 1 is greater than or equal to the preset energy difference.

Optionally, the first touch control information represents that the energy of the signal collected by the fourth microphone is less than or equal to a second preset threshold.

For example, the mic 1 in FIG. 18 is touched and held. When it is determined that a difference between the spectral energy amplitude of the signal collected by the mic 2 and the spectral energy amplitude of the signal collected by the mic 1 is greater than or equal to a preset energy difference, a difference between the spectral energy amplitude of the signal collected by the mic 3 and the spectral energy amplitude of the signal collected by the mic 1 is greater than or equal to the preset energy difference, and in (100 Hz, 8000 Hz), an average value of the spectral energy amplitudes of the signals collected by the mic 1 is less than or equal to -50 dB, it is determined that the mic 1 is touched and held.

The foregoing is described by using an example in which the average value of the spectral energy amplitudes of the signals collected by the mic 1 is less than or equal to -50 dB. Embodiments of this application are not limited thereto. For example, it may be further determined whether total frequency band energy of the signals collected by the mic 1 is less than or equal to the second preset threshold. In this case, the second preset threshold may be related to sensitivity of the microphone. For example, the second preset threshold may be an equivalent sound pressure level 40 dB.

The touching and holding the mic 1 may be one in the second touch operation.

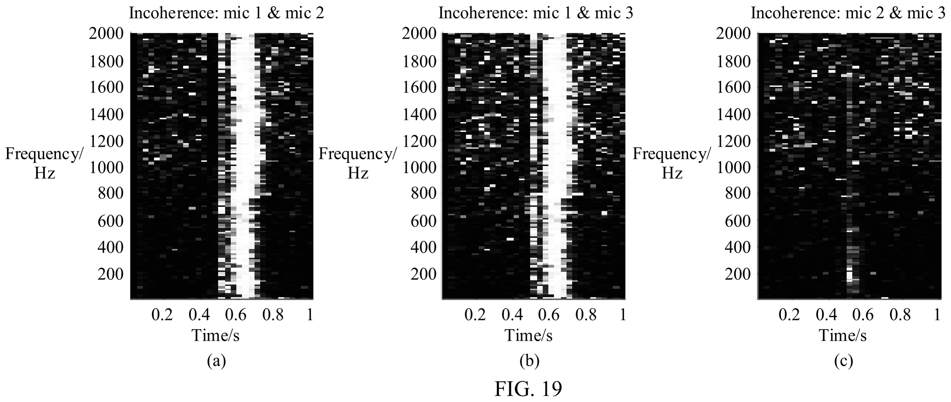

FIG. 19 is a diagram of determining, by using signal coherence, whether a microphone is touched or touched and held according to an embodiment of this application.

(a) in FIG. 19 shows a frequency domain coherence test curve of signals collected by a mic 1 and a mic 2 in 1s. A horizontal coordinate is time, and a vertical coordinate is a frequency. It can be learned that, in (0.5s, 0.7s), signal coherence between the mic 1 and the mic 2 is poor.

(b) in FIG. 19 shows a frequency domain coherence test curve of signals collected by the mic 1 and a mic 3 in 1s. A horizontal coordinate is time, and a vertical coordinate is a frequency. It can be learned that, in (0.5s, 0.7s), signal coherence between the mic 1 and the mic 3 is poor.

(a) in FIG. 19 shows a frequency domain coherence test curve of signals collected by the mic 2 and the mic 3 in 1s. A horizontal coordinate is time, and a vertical coordinate is a frequency. It can be learned that, in (0.5s, 0.7s), signal coherence between the mic 2 and the mic 3 is good.

In (a), (b), and (c) shown in FIG. 19, a brighter part indicates poorer signal coherence.

When it is learned that the signal coherence between the mic 1 and the mic 2 is poor, the signal coherence between the mic 1 and the mic 3 is good, and the signal coherence between the mic 2 and the mic 3 is good, it may be determined that the mic 1 is touched or touched and held, and the terminal device is controlled to perform the corresponding operation.

Alternatively, when it is learned that the signal coherence between the mic 1 and the mic 2 is poor, the signal coherence between the mic 1 and the mic 3 is good, and the signal coherence between the mic 2 and the mic 3 is good, the terminal device may be directly controlled to perform the corresponding operation.

A type of a touch operation on a microphone may be determined by picking up a signal collected by a microphone array and detecting a special signal in the signal. The special signal generally represents that a sound pickup hole of the microphone is touched or touched and held. For example, each microphone signal in the microphone array is $x_m(t)$, where $m = 1, 2, ..., M,$ and $t$ is a time sequence. The signal is sampled and framed, a sampling frequency is $f_s$, and a frame length is $N$. In this case, each frame of signal is $x_m^l(n)$, where $n = 1, 2, ..., N,$ and $l$ is a frame sequence. The frame of signal $x_m^l(n)$ is converted into a spectrum signal $X_m^l(k)$ through fast Fourier transformation, where $k$ is a frequency domain sub-band sequence, and $k = 1, 2, ..., N$. Whether the microphone is touched or touched and held may be determined based on the following dimensions.

(1) Time domain amplitude

For example, the time domain amplitude is an absolute value of a time domain signal, namely, $|x_m^l(n)|$. If a representative amplitude, for example, a maximum amplitude, is selected, a maximum amplitude of a signal collected by an $m^{th}$ microphone is $\max_{1 \leq n \leq N}(|x_m^l(n)|)$. If the maximum amplitude of the signal collected by the $m^{th}$ microphone is greater than or equal to a specific threshold, and is obviously greater than time domain amplitudes of signals collected by one or more other microphones, it may be determined that the $m^{th}$ microphone is touched. If the maximum amplitude of the signal collected by the $m^{th}$ microphone is less than or equal to the specific threshold, and is obviously less than the time domain amplitudes of the signals collected by the one or more other microphones, it may be determined that the $m^{th}$ microphone is touched and held.

(2) Total time domain energy

For example, total time domain energy of a signal collected by each microphone is $\sum_{n=1}^{N}|x_m^l(n)|^p$, where a value of $p$ is generally 1 or 2. If total time domain energy of a signal collected by an $m^{th}$ microphone is greater than or equal to a specific threshold, and is obviously greater than total time domain energy of signals collected by one or more other microphones, it may be determined that the $m^{th}$ microphone is touched. If the total time domain energy of the signal collected by the $m^{th}$ microphone is less than or equal to the specific threshold, and is obviously less than the total time domain energy of the signals collected by the one or more other microphones, it may be determined that the $m^{th}$ microphone is touched and held.

(3) Frequency domain sub-band amplitude

For example, a frequency domain sub-band amplitude of a signal collected by each microphone is $|X_m^l(k)|$. If a representative frequency domain sub-band amplitude, for example, a maximum sub-band amplitude, is selected, a maximum frequency domain sub-band amplitude of the signal collected by each microphone is $\max_{1 \leq n \leq N}(|X_m^l(k)|)$. If a maximum frequency domain sub-band amplitude of a signal collected by an $m^{th}$ microphone is greater than or equal to a specific threshold, and is obviously greater than maximum frequency domain sub-band amplitudes of signals collected by one or more other microphones, it may be determined that the $m^{th}$ microphone is touched. If the maximum frequency domain sub-band amplitude of the signal collected by the $m^{th}$ microphone is less than or equal to the specific threshold, and is obviously less than the maximum frequency domain sub-band amplitudes of the signals collected by the one or more other microphones, it may be determined that the $m^{th}$ microphone is touched and held.

(4) Total frequency band energy

For example, total frequency band energy of a signal collected by each microphone is $\sum_{n=n_1}^{n_2} |X_m^l(k)|^p$, where $n_1$ and $n_2$ are sequence numbers of a start frequency and an end frequency of a frequency band, and a value of $p$ is generally 1 or 2. If total frequency band energy of a signal of an $m^{th}$ microphone is greater than or equal to a specific threshold, and is obviously greater than total frequency band energy of signals collected by one or more other microphones, it may be determined that the $m^{th}$ microphone is touched. If the total frequency band energy of the signal collected by the $m^{th}$ microphone is less than or equal to the specific threshold, and is obviously less than the total frequency band energy of the signals collected by the one or more other microphones, it may be determined that the $m^{th}$ microphone is touched and held.

(5) Signal coherence

For example, frequency domain coherence between signals is used as an example. A frequency band coherence coefficient between an $m^{th}$ microphone and another $m'^{th}$ microphone is defined as:

$$\eta(n) = \left| E\{X_m^l(n)(X_{m'}^l)^*(n)\} \Big/ \sqrt{E\{X_m^l(n)(X_m^l)^*(n)\}E\{X_{m'}^l(n)(X_{m'}^l)^*(n)\}} \right|, m \neq m'$$

where $\eta(n)$ is a frequency band coherence coefficient between the $m^{th}$ microphone and the another $m'^{th}$ microphone, $(\cdot)$ *represents conjugation, $E\{\cdot\}$ represents expectation, and $X_{m'}^l$ represents a spectrum signal of the $m'^{th}$ microphone. An average frequency band coherence coefficient between the $m^{th}$ microphone and the $m'^{th}$ microphone is $(\sum_{n=n_1}^{n_2} \eta(n))/(n_2 - n_1 + 1)$. If the average frequency band coherence coefficient between the $m^{th}$ microphone and another microphone is less than or equal to a specific threshold, it may be determined that the $m^{th}$ microphone is touched or touched and held.

According to the foregoing steps, after the energy difference and/or the signal coherence between the plurality of microphones are obtained, the terminal device may be directly controlled to perform the corresponding operation; or after the energy difference and/or the signal coherence between the plurality of microphones are obtained, types of touch operations on some microphones in the plurality of microphones are determined, to control the terminal device to perform an operation corresponding to the type of the touch operation.

The foregoing manner of determining that the microphone is touched or touched and held is merely an example. Embodiments of this application are not limited thereto. For example, the types of the touch operations on the microphones may be further determined by using average power of signals collected by the microphones.

Optionally, the terminal device is a transportation means, the transportation means includes a cockpit, the one or more microphones are located in a first area in the cockpit, and the controlling the terminal device to perform the first operation includes: controlling a cockpit device in the first area to perform the first operation.

For example, as shown in FIG. 5(a), when the continuous touch operation corresponding to the microphone 1 in the driver area is obtained, the vehicle may control the volume of the speaker in the driver area to be decreased.

As shown in FIG. 5(b), when obtaining the touch and hold operation corresponding to the microphone 1 in the driver area, the vehicle may control the volume of the speaker in the driver area to be increased.

For example, as shown in FIG. 8(b), when the sliding operation corresponding to the microphone 5 to the microphone 8 is obtained, the vehicle may control the display in the second-row left-side area to switch from the playing interface on which the song B is displayed to the playing interface on which the song D is displayed.

Optionally, the terminal device is a transportation means, the transportation means includes a cockpit, the cockpit includes a first area and a second area, the one or more microphones are located in the first area, and the controlling the terminal device to perform the first operation includes: controlling a cockpit device in the second area to perform the first operation.

For example, as shown in FIG. 10, when obtaining the touch and hold operation corresponding to the rightmost microphone 9 in the microphone array 5, the vehicle may open the window in the second-row right-side area and display the prompt information 1001 "Opening the window of the right rear door for you" on a central display.

Optionally, the terminal device is a transportation means, the transportation means includes a cockpit, the cockpit includes a plurality of areas, the one or more microphones include a first microphone, and the first microphone corresponds to the plurality of areas.

That the first microphone corresponds to the plurality of areas may be understood as that the first microphone may control cockpit devices in the plurality of areas.

For example, as shown in FIG. 3, the microphone 1 may correspond to the second-row left-side area and the second-row right-side area. For example, the cockpit device is a speaker. When an operation of tapping the microphone 1 is obtained, volume of a speaker in the second-row left-side area may be controlled to be increased. When an operation of double-tapping the microphone 1 is obtained, the volume of the speaker in the second-row left-side area may be controlled to be decreased. When an operation of continuously tapping the microphone 1 is obtained, volume of a speaker in the second-row right-side area may be controlled to be increased. When an operation of touching and holding the microphone 1 is obtained, the volume of the speaker in the second-row right-side area may be controlled to be decreased.

Optionally, the terminal device is a vehicle, and the first operation includes controlling a vehicle window to be opened or closed, adjusting volume strength of a sound-making apparatus in the vehicle, switching a multimedia file, controlling a vehicle door to be locked or unlocked, or controlling a display apparatus in the vehicle to display a home screen.

Optionally, the terminal device is a vehicle, and the first operation includes starting an application. For example, Table 2 shows a correspondence between a type of a touch operation and a started application.

Table 2

| Type of a touch operation | Started application |
|---|---|
| Tap | Setting application |
| Double-tap | Music application |
| Continuous tap | Navigation application |
| Touch and hold | Video application |
| Continuous touch | Weather application |
| ... | ... |

For example, for the user in the driver area, the navigation application may be started by continuously tapping the one or more microphones in the microphone array. In this way, in a process in which the user drives the vehicle, the user does not need to search a plurality of applications for an application that the user wants to start. This helps improve driving safety of the user.

The correspondence between the type of the touch operation and the started application in Table 2 is merely an example. This is not specifically limited in embodiments of this application.

The correspondence in Table 2 may be configured before the vehicle is delivered from a factory, or may be manually configured by the user. When the correspondence is manually configured by the user, users in different areas may separately configure correspondences that the users want.

For example, the user in the driver area may configure a correspondence between the tap operation and the setting application. In this way, when obtaining the tap operation of the user on the microphone 1, the vehicle may control a central display to display a display interface of the setting application.

For another example, the user in the front passenger area may configure a correspondence between the tap operation and the video application. In this way, when obtaining the tap operation of the user on the microphone 2, the vehicle may control an entertainment screen in the front passenger area to display a display interface of the video application.

In this embodiment of this application, when obtaining types of different types of touch operations, the vehicle may control a display to display different types of applications. In this way, the user does not need to search, on the display, a plurality of applications for an application that the user wants to start. This helps improve efficiency of starting an application by the user, and helps improve human-machine interaction experience of the user.

Optionally, a configuration of the microphone array is a linear array, a circular array, a rectangular array, or a multi-arm array.

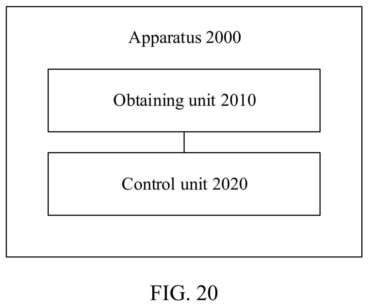

FIG. 20 is a block diagram of a control apparatus 2000 according to an embodiment of this application. As shown in FIG. 20, the apparatus 2000 includes: an obtaining unit 2010, configured to obtain first touch control information corresponding to one or more microphones, where the first touch control information indicates a first operation, the one or more microphones belong to a pre-disposed microphone array, and microphones in the microphone array correspond to different spatial areas in a terminal device; and a control unit 2020, configured to control, based on the first touch control information, the terminal device to perform the first operation.

Optionally, the terminal device is a transportation means, the transportation means includes a cockpit, the one or more microphones are located in a first area in the cockpit, and the control unit 2020 is configured to: control a cockpit device in the first area to perform the first operation.

Optionally, the terminal device is a transportation means, the transportation means includes a cockpit, the cockpit includes a first area and a second area, the one or more microphones are located in the first area, and the control unit 2020 is configured to: control a cockpit device in the second area to perform the first operation.

Optionally, the terminal device is a vehicle, and the first operation includes controlling a vehicle window to be opened or closed, adjusting volume strength of a sound-making apparatus in the vehicle, switching a multimedia file, controlling a vehicle door to be locked or unlocked, or controlling a display apparatus in the vehicle to display a home screen.

Optionally, a configuration of the microphone array is a linear array, a circular array, a rectangular array, or a multi-arm array.

Optionally, the terminal device further includes a mechanical transmission component. The obtaining unit 2010 is further configured to: before obtaining the first touch control information corresponding to the one or more microphones, obtain a first touch operation of a user on the mechanical transmission component; and the control unit 2020 is further configured to control, based on the first touch operation, the mechanical transmission component to touch the one or more microphones.

Optionally, the first touch control information includes a second touch operation corresponding to the one or more microphones; and the control unit 2020 is configured to control, based on the second touch operation, the terminal device to perform the first operation.

Optionally, the first touch control information corresponds to one microphone, and the first touch control information represents an energy difference between signals collected by the microphone at different moments, and/or signal coherence between the signals collected by the microphone at different moments.

Optionally, the first touch control information corresponds to a plurality of microphones, and the first touch control information represents an energy difference between signals collected by the plurality of microphones, and/or signal coherence between the signals collected by the plurality of microphones.

Optionally, the plurality of microphones include a second microphone and a third microphone. The first operation is an operation corresponding to tapping the second microphone, and the first touch control information represents that in a first time period, energy of a signal collected by the second microphone is greater than energy of a signal collected by the third microphone, and an energy difference between the signal collected by the second microphone and the signal collected by the third microphone meets a first preset condition.

Optionally, the plurality of microphones include a second microphone and a third microphone. The first operation is an operation corresponding to continuously tapping or continuously touching the second microphone, and the first touch control information represents that in a plurality of time periods, energy of a signal collected by the second microphone is greater than energy of a signal collected by the third microphone, and an energy difference between the signal collected by the second microphone and the signal collected by the third microphone meets a first preset condition.

Optionally, the first touch control information represents that the energy of the signal collected by the second microphone is greater than or equal to a first preset threshold.

Optionally, the plurality of microphones include a fourth microphone and a fifth microphone. The first operation is an operation corresponding to touching and holding the fourth microphone, and the first touch control information represents that in a first frequency band, energy of a signal collected by the fourth microphone is less than energy of a signal collected by the fifth microphone, and an energy difference between the signal collected by the fourth microphone and the signal collected by the fifth microphone meets a second preset condition.

Optionally, the first touch control information represents that the energy of the signal collected by the fourth microphone is less than or equal to a second preset threshold.

Optionally, the energy difference includes at least one of a time domain amplitude difference, a time domain energy difference, a frequency domain sub-band amplitude difference, and a frequency band energy difference.

For example, the obtaining unit 2010 may be the computing platform in FIG. 1, or a processing circuit, a processor, or a controller on the computing platform in FIG. 1. For example, the obtaining unit 2010 is a processor 121 on the computing platform, and the processor 121 may obtain the first touch control information corresponding to the one or more microphones. For example, the processor 121 may obtain the signals collected by the one or more microphones.

For another example, the determining unit may be the computing platform in FIG. 1, or a processing circuit, a processor, or a controller on the computing platform in FIG. 1. For example, the determining unit is a processor 122 on the computing platform. The processor 122 may analyze the signals that are collected by the one or more microphones and that are obtained by the processor 121, for example, determine a type of a touch operation on the one or more microphones by analyzing the energy difference and/or the signal coherence between the signals collected by the microphones.

For another example, the control unit 2020 may be the computing platform in FIG. 1, or a processing circuit, a processor, or a controller on the computing platform in FIG. 1. For example, the control unit 2020 is a processor 123 on the computing platform. The processor 123 may control, based on the type that is of the touch operation on the one or more microphones and that is determined by the processor 122, the terminal device to perform an operation corresponding to the type of the touch operation.

The functions implemented by the obtaining unit 2010, the functions implemented by the determining unit, and the functions implemented by the control unit 2020 above may be separately implemented by different processors, or a part of functions may be implemented by a same processor, or all functions may be implemented by a same processor. This is not limited in this embodiment of this application.

It should be understood that division into the units in the foregoing apparatus is merely logical function division. During actual implementation, all or a part of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of a part or all of the units may be implemented by designing the hardware circuit. The hardware circuit may be understood as one or more processors. For example, in an implementation, the hardware circuit is an ASIC, and functions of a part or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement the functions of the part or all of the foregoing units. All units of the foregoing apparatus may be implemented in a form of software invoked by the processor, or all units may be implemented in a form of hardware circuit, or a part of units may be implemented in a form of software invoked by the processor, and a remaining part may be implemented in a form of hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of a part or all of the foregoing units. In addition, the processor may alternatively be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or a part of the units of the foregoing apparatus may be integrated, or may be implemented independently. In an implementation, these units are integrated together and implemented in a form of SoC. The SoC may include at least one processor, configured to implement any one of the foregoing methods or implement functions of the units in the apparatus. Types of the at least one processor may be different, for example, including a CPU and an FPGA, a CPU and an artificial intelligence processor, or a CPU and a GPU.

An embodiment of this application further provides a control apparatus. The apparatus includes a processing unit and a storage unit. The storage unit is configured to store instructions. The processing unit executes the instructions stored in the storage unit, so that the apparatus is enabled to perform the control method performed in the foregoing embodiments.

Optionally, if the apparatus is located in a terminal device, the processing unit may be the processors 121 to 12n shown in FIG. 1.

An embodiment of this application further provides a control system. The control system may include a computing platform and a microphone array. The computing platform may include the control apparatus 2000.

Optionally, the control system may further include a cockpit device.

Optionally, the control system may further include a mechanical transmission component.

An embodiment of this application further provides a terminal device. The terminal device may include the foregoing control apparatus 2000 or the control system.

Optionally, the terminal device may be a transportation means (for example, a vehicle).

An embodiment of this application further provides a computer program product. The computer program product includes computer program code. When the computer program code is run on a computer, the computer is enabled to perform the control method in the foregoing embodiments.

An embodiment of this application further provides a computer-readable medium. The computer-readable medium stores program code. When the computer program code is run on a computer, the computer is enabled to perform the control method in the foregoing embodiments.

An embodiment of this application further provides a chip. The chip includes a circuit. The circuit is configured to perform the control method in the foregoing embodiments.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each specific application. However, it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of software product. The software product is stored in a storage medium, and includes several instructions for enabling a computing device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A control method, comprising:

obtaining first touch control information corresponding to one or more microphones, wherein the first touch control information indicates a first operation, the one or more microphones belong to a pre-disposed microphone array, and microphones in the microphone array correspond to different spatial areas in a terminal device; and controlling, based on the first touch control information, the terminal device to perform the first operation.

2. The method according to claim 1, wherein the terminal device is a transportation means, the transportation means comprises a cockpit, the one or more microphones are located in a first area in the cockpit, and the controlling the terminal device to perform the first operation comprises:
controlling a cockpit device in the first area to perform the first operation.

3. The method according to claim 1, wherein the terminal device is a transportation means, the transportation means comprises a cockpit, the cockpit comprises a first area and a second area, the one or more microphones are located in the first area, and the controlling the terminal device to perform the first operation comprises:
controlling a cockpit device in the second area to perform the first operation.

4. The method according to claim 1, wherein the terminal device is a transportation means, the transportation means comprises a cockpit, the cockpit comprises a plurality of areas, the one or more microphones comprise a first microphone, and the first microphone corresponds to the plurality of areas.

5. The method according to any one of claims 1 to 4, wherein the terminal device is a vehicle, and the first operation comprises controlling a vehicle window to be opened or closed, adjusting volume strength of a sound-making apparatus in the vehicle, switching a multimedia file, controlling a vehicle door to be locked or unlocked, or controlling a display apparatus in the vehicle to display a home screen.

6. The method according to any one of claims 1 to 5, wherein a configuration of the microphone array is a linear array, a circular array, a rectangular array, or a multi-arm array.

7. The method according to any one of claims 1 to 6, wherein before the obtaining the first touch control information corresponding to the one or more microphones, the method further comprises:

obtaining a first touch operation of a user on a mechanical transmission component comprised in the terminal device; and
controlling, based on the first touch operation, the mechanical transmission component to touch the one or more microphones.

8. The method according to any one of claims 1 to 7, wherein the first touch control information comprises a second touch operation corresponding to the one or more microphones; and
the controlling, based on the first touch control information, the terminal device to perform the first operation comprises:
controlling, based on the second touch operation, the terminal device to perform the first operation.

9. The method according to any one of claims 1 to 7, wherein the first touch control information corresponds to one microphone, and the first touch control information represents an energy difference between signals collected by the microphone at different moments, and/or signal coherence between the signals collected by the microphone at different moments.

10. The method according to any one of claims 1 to 7, wherein the first touch control information corresponds to a plurality of microphones, and the first touch control information represents an energy difference between signals collected by the plurality of microphones, and/or signal coherence between the signals collected by the plurality of microphones.

11. The method according to claim 10, wherein the plurality of microphones comprise a second microphone and a third microphone; and
the first operation is an operation corresponding to tapping the second microphone, and the first touch control information represents that in a first time period, energy of a signal collected by the second microphone is greater than energy of a signal collected by the third microphone, and an energy difference between the signal collected by the second microphone and the signal collected by the third microphone meets a first preset condition.

12. The method according to claim 10, wherein the plurality of microphones comprise a second microphone and a third microphone; and

the first operation is an operation corresponding to continuously tapping or continuously touching the second microphone, and the first touch control information represents that in a plurality of time periods, energy of a signal collected by the second microphone is greater than energy of a signal collected by the third microphone, and an energy difference between the signal collected by the second microphone and the signal collected by the third microphone meets a first preset condition.

13. The method according to claim 11 or 12, wherein the first touch control information represents that the energy of the signal collected by the second microphone is greater than or equal to a first preset threshold.

14. The method according to claim 10, wherein the plurality of microphones comprise a fourth microphone and a fifth microphone; and

the first operation is an operation corresponding to touching and holding the fourth microphone, and the first touch control information represents that in a first frequency band, energy of a signal collected by the fourth microphone is less than energy of a signal collected by the fifth microphone, and an energy difference between the signal collected by the fourth microphone and the signal collected by the fifth microphone meets a second preset condition.

15. The method according to claim 14, wherein the first touch control information represents that the energy of the signal collected by the fourth microphone is less than or equal to a second preset threshold.

16. The method according to any one of claims 9 to 15, wherein the energy difference comprises at least one of a time domain amplitude difference, a time domain energy difference, a frequency domain sub-band amplitude difference, and a frequency band energy difference.

17. A control apparatus, comprising:

an obtaining unit, configured to obtain first touch control information corresponding to one or more microphones, wherein the first touch control information indicates a first operation, the one or more microphones belong to a pre-disposed microphone array, and microphones in the microphone array correspond to different spatial areas in a terminal device; and
a control unit, configured to control, based on the first touch control information, the terminal device to perform the first operation.

18. The apparatus according to claim 17, wherein the terminal device is a transportation means, the transportation means comprises a cockpit, the one or more microphones are located in a first area in the cockpit, and the control unit is configured to:
control a cockpit device in the first area to perform the first operation.

19. The apparatus according to claim 17, wherein the terminal device is a transportation means, the transportation means comprises a cockpit, the cockpit comprises a first area and a second area, the one or more microphones are located in the first area, and the control unit is configured to:
control a cockpit device in the second area to perform the first operation.

20. The apparatus according to claim 17, wherein the terminal device is a transportation means, the transportation means comprises a cockpit, the cockpit comprises a plurality of areas, the one or more microphones comprise a first microphone, and the first microphone corresponds to the plurality of areas.

21. The apparatus according to any one of claims 17 to 20, wherein the terminal device is a vehicle, and the first operation comprises controlling a vehicle window to be opened or closed, adjusting volume strength of a sound-making apparatus in the vehicle, switching a multimedia file, controlling a vehicle door to be locked or unlocked, or controlling a display apparatus in the vehicle to display a home screen.

22. The apparatus according to any one of claims 17 to 21, wherein a configuration of the microphone array is a linear array, a circular array, a rectangular array, or a multi-arm array.

23. The apparatus according to any one of claims 17 to 22, wherein the terminal device further comprises a mechanical transmission component, wherein

the obtaining unit is further configured to: before obtaining the first touch control information corresponding to the one or more microphones, obtain a first touch operation of a user on the mechanical transmission component; and the control unit is further configured to control, based on the first touch operation, the mechanical transmission component to touch the one or more microphones.

24. The apparatus according to any one of claims 17 to 23, wherein the first touch control information comprises a second touch operation corresponding to the one or more microphones; and
the control unit is configured to control, based on the second touch operation, the terminal device to perform the first operation.

25. The apparatus according to any one of claims 17 to 23, wherein the first touch control information corresponds to one microphone, and the first touch control information represents an energy difference between signals collected by the microphone at different moments, and/or signal coherence between the signals collected by the microphone at different moments.

26. The apparatus according to any one of claims 17 to 23, wherein the first touch control information corresponds to a plurality of microphones, and the first touch control information represents an energy difference between signals collected by the plurality of microphones, and/or signal coherence between the signals collected by the plurality of microphones.

27. The apparatus according to claim 26, wherein the plurality of microphones comprise a second microphone and a third microphone; and
the first operation is an operation corresponding to tapping the second microphone, and the first touch control information represents that in a first time period, energy of a signal collected by the second microphone is greater than energy of a signal collected by the third microphone, and an energy difference between the signal collected by the second microphone and the signal collected by the third microphone meets a first preset condition.

28. The apparatus according to claim 26, wherein the plurality of microphones comprise a second microphone and a third microphone; and
the first operation is an operation corresponding to continuously tapping or continuously touching the second microphone, and the first touch control information represents that in a plurality of time periods, energy of a signal collected by the second microphone is greater than energy of a signal collected by the third microphone, and an energy difference between the signal collected by the second microphone and the signal collected by the third microphone meets a first preset condition.

29. The apparatus according to claim 27 or 28, wherein the first touch control information represents that the energy of the signal collected by the second microphone is greater than or equal to a first preset threshold.

30. The apparatus according to claim 26, wherein the plurality of microphones comprise a fourth microphone and a fifth microphone; and
the first operation is an operation corresponding to touching and holding the fourth microphone, and the first touch control information represents that in a first frequency band, energy of a signal collected by the fourth microphone is less than energy of a signal collected by the fifth microphone, and an energy difference between the signal collected by the fourth microphone and the signal collected by the fifth microphone meets a second preset condition.

31. The apparatus according to claim 30, wherein the first touch control information represents that the energy of the signal collected by the fourth microphone is less than or equal to a second preset threshold.

32. The apparatus according to any one of claims 25 to 31, wherein the energy difference comprises at least one of a time domain amplitude difference, a time domain energy difference, a frequency domain sub-band amplitude difference, and a frequency band energy difference.

33. A control apparatus, comprising:

a memory, configured to store a computer program; and

a processor, configured to execute the computer program stored in the memory, to enable the apparatus to perform the control method according to any one of claims 1 to 16.

34. A control system, comprising a microphone array and a computing platform, wherein the computing platform comprises the control apparatus according to any one of claims 16 to 33.

35. A terminal device, comprising the control apparatus according to any one of claims 16 to 33, or comprising the control system according to claim 34.

36. The terminal device according to claim 35, wherein the terminal device is a transportation means.

37. A computer-readable storage medium, wherein the computer-readable storage medium stores a computer program, and when the computer program is executed by a computer, the control method according to any one of claims 1 to 16 is implemented.

38. A chip, wherein the chip comprises a circuit, and the circuit is configured to perform the control method according to any one of claims 1 to 16.

Terminal device 100

Microphone array 110

Computing platform 120

Processor 121

Processor 122

...

Processor 12n

FIG. 1

FIG. 2

FIG. 3

Microphone 1

FIG. 4(a)

Tap a microphone 1

Singer: Singer A
Song: *Song B*

x x x x x x x x x

03:45                                                                04:20

FIG. 4(b)

Continuously touch a microphone 1

The volume of the speaker in the driver area has been decreased for you! —— 501

03:45                                                                          04:20

25°C          24.5°C

FIG. 5(a)

Touch and hold a microphone 1

The volume of the speaker in the driver area has been increased for you! — 502

03:45                                                                04:20

FIG. 5(b)

FIG. 6

FIG. 7

Singer: Singer A — 801

Song: *Song B* — 802

x x x x x x x x x — 803

804

03:40      04:20

805    806    807    808

25°C    24.5°C

Microphone array 3

Microphone 5
Microphone 6
Microphone 7
Microphone 8

FIG. 8(a)

Slide from left to right

Singer: Singer C
Song: *Song D*

x x x x x x x x x

00:00                    03:50

FIG. 8(b)

Tap a microphone 5 and
then slide from left to right

The volume in the second-row left-side area has been
increased for you

901

00:30

03:50

FIG. 9(a)

Tap a microphone 8 and
then slide from right to left

The volume in the second-row left-side area has been
decreased for you

902

00:30                                                                03:50

FIG. 9(b)

Microphone array 5    Microphone 9

Opening the window of the right rear door for you    1001

Setting

Singer: Singer A
Song: *Song B*
x x x x x x x x x

80%    260 km

Navigation

25°C    24.5°C

FIG. 10

FIG. 11(a)

EP 4 700 564 A1

FIG. 11(b)

EP 4 700 564 A1

(a)

(b)

FIG. 12

1300

S1310: Obtain first touch control information corresponding to one or more microphones, where the first touch control information indicates a first operation, the one or more microphones belong to a pre-disposed microphone array, and microphones in the microphone array correspond to different spatial areas in a terminal device

S1320: Control, based on the first touch control information, the terminal device to perform the first operation

FIG. 13

FIG. 14

FIG. 15

FIG. 16

FIG. 17

FIG. 18

Incoherence: mic 1 & mic 2    Incoherence: mic 1 & mic 3    Incoherence: mic 2 & mic 3

(a)    (b)    (c)

FIG. 19

Apparatus 2000

Obtaining unit 2010

Control unit 2020

FIG. 20

## INTERNATIONAL SEARCH REPORT

International application No.

**PCT/CN2023/089712**

### A. CLASSIFICATION OF SUBJECT MATTER

G06F 3/16(2006.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, CNKI, DWPI, SIPOABS, EXTXT, ENTXTC: 麦克风, 触碰, 触摸, 控制, 阵列, 车辆, 操作, microphone , touch, control, array, vehicle, operation

### C. DOCUMENTS CONSIDERED TO BE RELEVANT

| Category* | Citation of document, with indication, where appropriate, of the relevant passages | Relevant to claim No. |
|---|---|---|
| X | CN 110691016 A (GOERTEK INC.) 14 January 2020 (2020-01-14) description, paragraphs 104-242, and figures 3-5 | 1-38 |
| A | US 2018190282 A1 (QUALCOMM INC.) 05 July 2018 (2018-07-05) entire document | 1-38 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 January 2024** | **03 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/089712**

| Patent document cited in search report | | | Publication date (day/month/year) | Patent family member(s) | | | Publication date (day/month/year) |
|---|---|---|---|---|---|---|---|
| CN | 110691016 | A | 14 January 2020 | CN | 110691016 | B | 31 August 2021 |
| US | 2018190282 | A1 | 05 July 2018 | US | 2022277744 | A1 | 01 September 2022 |

Form PCT/ISA/210 (patent family annex) (July 2022)